# EUROPÄISCHE PATENTSCHRIFT

(11) **EP 3 613 292 B1**
(45) Veröffentlichungstag und Bekanntmachung des Hinweises auf die Patenterteilung: **06.10.2021**
(21) Anmeldenummer: 19189113.4
(22) Anmeldetag: 30.07.2019
(51) Int. Cl.: A22C 11/00, B65B 19/34, B65G 47/90

(54) **GREIFEREINRICHTUNG ZUM GLEICHZEITIGEN GREIFEN MEHRERER LÄNGLICHER FLEXIBLER GEGENSTÄNDE, INSBESONDERE WÜRSTE, HANDHABUNGSVORRICHTUNG UND VERFAHREN**
GRIPPER DEVICE FOR SIMULTANEOUSLY GRIPPING SEVERAL ELONGATED FLEXIBLE OBJECTS, IN PARTICULAR SAUSAGES, HANDLING DEVICE AND METHOD
DISPOSITIF DE PRÉHENSION PERMETTANT LA PRÉHENSION SIMULTANÉE D'UNE PLURALITÉ D'OBJETS FLEXIBLES LONGS, EN PARTICULIER DES SAUCISSES, DISPOSITIF DE MANUTENTION ET PROCÉDÉ

(30) Priorität: 22.08.2018 DE 102018120502
(43) Veröffentlichungstag der Anmeldung: 26.02.2020
(73) Patentinhaber: Singer & Sohn GmbH, 92334 Berching (DE)
(72) Erfinder: Singer, Manfred, 92334 Berching (DE); Koller, Dieter, 92360 Mühlhausen (DE)
(74) Vertreter: Lindner Blaumeier Patent- und Rechtsanwälte

(56) Entgegenhaltungen:
- EP-A1- 1 886 772
- DE-A1- 4 215 361
- DE-U1-202015 104 994

## Beschreibung

Die Erfindung betrifft eine Greifereinrichtung zum gleichzeitigen Greifen mehrerer länglicher, flexibler Gegenstände, insbesondere Würste, mit mehreren parallel zueinander angeordneten Greiferabschnitten.

Insbesondere im Bereich der Lebensmittel ist es mitunter erforderlich, ein längliches Lebensmittel, das flexibel, also nicht vollständig formstabil ist, zu greifen und zu versetzen. Ein Beispiel sind Würste unterschiedlicher Art, die üblicherweise aus einer Wursthülle und darin eingefüllter Wurstmasse oder Wurstbrät bestehen. Diese Gegenstände respektive Würste werden zumeist maschinell hergestellt und auf einer Transporteinrichtung, beispielsweise einem Stollenband, transportiert. Von diesem sollen sie abgenommen und beispielsweise auf ein Abtransportband oder in eine Verpackungsschale oder dergleichen eingebracht werden.

Ein Beispiel für eine solche Vorrichtung zur Behandlung von Würsten ist in DE 20 2015 104 994 U1 gezeigt. Zum Greifen und Versetzen mehrerer Würste ist eine Greifereinrichtung vorgesehen, die mehrere parallel zueinander angeordnete Greiferabschnitte aufweist, wobei jeder Greiferabschnitt zum Greifen einer Wurst dient. Die Greiferabschnitte weisen jeweils voneinander quer zur Transporteinrichtung des Anförderbandes, auf dem die Würste quer in einer Reihe liegen, beabstandete, schaufelartige Greifer auf. Zum Greifen der in den Stollen des anfördernden Stollenbandes liegenden Würste werden die Greifer nach außen geschwenkt, so dass die Greifereinrichtung von oben auf die Wurstgruppe bewegt werden kann. Mit Erreichen der Greifposition schwenken die Greiferschaufeln einwärts und untergreifen die Würste an den Enden. Die Greiferschaufeln bewegen sich also von der Seite her quasi in Wurstlängsrichtung unter die Wurstenden. Mit Erreichen der Endstellung der Greiferschaufeln wird die Greifereinrichtung angehoben, die einzelnen Würste liegen in den jeweiligen Schaufelpaaren und werden hierüber mitgenommen und versetzt.

Mitunter weisen die handzuhabenden Würste art- oder produktionsbedingt eine leicht gebogene Form auf. Auf dem Transportband sind die gebogenen Würste mitunter bereits ausgerichtet, das heißt, dass die Würste mit ihren Krümmungen alle in derselben Richtung ausgerichtet sind. Dies ist erforderlich, um die Würste möglichst kompakt, beispielsweise in eine Transportschale, einlegen zu können. Es hat sich nun herausgestellt, dass bei Verwendung der vorstehend beschriebenen Greifereinrichtung mitunter eine oder mehrere Würste nach dem Anheben mit ihrer Wölbung oder Krümmung wieder nach unten schwenken, also quasi aus der horizontalen Lage in eine vertikale Lage, sie hängen also nach unten durch. Werden die Würste nun in beispielsweise eine Transportschale eingelegt, so laufen die nach unten hängenden Krümmungen zuerst auf den Aufnahmeboden. Werden die Würste nun freigegeben, ist nicht sichergestellt, in welcher Richtung sie sich sodann ablegen, so dass mitunter kein geordnetes Einlegen möglich ist.

Der Erfindung liegt damit das Problem zugrunde, eine demgegenüber verbesserte Greifereinrichtung anzugeben.

Zur Lösung dieses Problems ist erfindungsgemäß eine Greifereinrichtung gemäss Anspruch 1 zum gleichzeitigen Greifen mehrerer länglicher flexibler Gegenstände, insbesondere Würste, mit mehreren parallel zueinander angeordneten Greiferabschnitten vorgesehen, die sich erfindungsgemäß dadurch auszeichnet, dass jeder Greiferabschnitt zwei voneinander beabstandete Fingerpaare aufweist, wobei die Finger jedes Fingerpaares den Gegenstand an gegenüberliegenden Seiten greifen und simultan zum Greifen eines Gegenstandes aufeinander zubewegbar sind, wobei die Greiferabschnitte simultan betätigbar sind.

Bei der erfindungsgemäßen Greifereinrichtung sind an jedem Greiferabschnitt zwei voneinander beabstandete Fingerpaare vorgesehen, mit denen es möglich ist, den Gegenstand, vorzugsweise die Wurst, an zwei gegenüberliegenden Seiten an zwei voneinander beabstandeten Positionen zu greifen. Hierüber wird die Wurst hinreichend fest gegriffen und fixiert, eine Veränderung der Wurstposition nach dem Greifen ist vorteilhaft nicht mehr möglich. Dies führt wiederum dazu, dass die Würste der gegriffenen Wurstgruppe ihre zuvor ausgerichtete Position relativ zueinander beibehalten, also in ihrer Ausrichtposition verbleiben, so dass sie in eben dieser geordnet und kompakt auf einer Ablage abgelegt bzw. beispielsweise in eine Transportschale eingelegt werden können. Im Folgenden wird überwiegend von der Handhabung von Würsten zur Vereinfachung der Beschreibung gesprochen. Gleichwohl ist die nur stellvertretend für andere längliche, flexible Gegenstände.

Dabei sind die Finger jedes Fingerpaares simultan zum Greifen aufeinander zubewegbar, wobei die Greiferabschnitte allesamt simultan betätigbar sind. Hierüber ist sichergestellt, dass alle mit der Greifereinrichtung zu greifenden Würste gleichzeitig gegriffen werden, so dass gewährleistet ist, dass die komplette Wurstgruppe aufgenommen ist und bewegt werden kann. Ein etwaiger Fehlgriff, beispielsweise weil eine Wurst am anfördernden Transportband fehlerhaft liegt oder zu kurz ist etc., kann beispielsweise über eine geeignete Sensorik erfasst werden, woraufhin der Zugriff wieder gelöst wird, gegebenenfalls kann ein solcher auch vollständig unterbleiben, wenn zuvor eine fehlerhaft positionierte oder geformte Wurst sensiert wird.

Die erfindungsgemäße Greifereinrichtung ermöglicht es also, die flexiblen Gegenstände, also insbesondere die Würste, in eben ihrer Antransportlage und Ausrichtung zueinander zu greifen, dabei zu fixieren und in eben dieser Ausrichtung in oder auf eine Ablage zu überführen und dorthin abzulegen. Eine Gefahr hinsichtlich einer Änderung der Ausrichtung ist mit besonderem Vorteil nicht mehr gegeben, so dass ein schneller Transport- oder Umsetzbetrieb mit extrem hohem Durchsatz möglich ist. Sind an der Greifereinrichtung beispielsweise sechs oder acht Greiferabschnitte vorgesehen, die es ermöglichen, gleichzeitig sechs oder acht Würste zu greifen, sind Durchsätze von mehreren 100 Würsten pro Minute ohne weiteres realisierbar.

Wie vorstehend beschrieben sind die Finger jedes Fingerpaares aufeinander zu bewegbar. In der Aufnahmestellung sind sie voneinander weg bewegt, mithin also geöffnet, zum Greifen werden sie aufeinander zu bewegt, so dass die Wurst zwischen ihnen sicher gegriffen, respektive geklemmt, wird. Diese Bewegung erfolgt durch Verschwenken der Finger, wozu jeder Finger um eine Schwenkachse schwenkbar gelagert ist, wobei die Finger mit einem gemeinsamen Antriebsmittel gekoppelt sind, so dass eine simultane Bewegung der Finger eines Greiferabschnitts und damit aber auch aller Finger aller Greiferabschnitte möglich ist. Die gebogenen, alternativ geraden oder anderweitig profilierten, Finger sind zweckmäßigerweise um eine vertikale Achse bewegbar, sie verlaufen mit ihren an den Würsten angreifenden länglichen Fingerabschnitten letztlich senkrecht zur Auflageebene der Würste, so dass sie im geöffneten Zustand von oben zwischen die Würste bewegt werden können und durch Verschwenken um die vertikale Schwenkachse von der Seite her gegen die Wurstseiten bewegt werden können.

Zur simultanen Fingerbewegung ist, wie beschrieben, zweckmäßigerweise ein gemeinsames Antriebsmittel vorgesehen, mit dem die Finger bewegungsgekoppelt sind. Zweckmäßigerweise umfasst das Antriebsmittel eine über ein Stellmittel um ihre Längsachse in beide Richtungen drehbare Antriebswelle, mit der die Finger gekoppelt sind. Diese Antriebswelle, beispielsweise eine Vier- oder Mehrkantwelle, ist beispielsweise um 160° von einer Endstellung in die andere Endstellung und umgekehrt drehbar, das heißt, dass eine permanente Richtungsänderung der Wellendrehrichtung erfolgt. In der einen Endstellung sind die Finger geöffnet, also maximal aufgeschwenkt, in der anderen Endstellung sind die Finger in die Greifstellung zusammengeschwenkt. Durch einfache Änderung der Drehrichtung und Verdrehung der Antriebswelle sind demzufolge die mit ihr bewegungsgekoppelten Finger auf einfache Weise bewegbar.

Zur Bewegungskopplung der Finger mit der Antriebswelle sind gemäß einer zweckmäßigen Weiterbildung der Erfindung die Finger jedes Greiferabschnitts mit einer gemeinsamen, über die Antriebswelle drehbare Kurvenscheibe, gegen die die Finger vorzugsweise vorgespannt anliegen, gekoppelt. Über diese Kurvenscheibe wird die Fingerverschwenkung erwirkt. Jeder Finger liegt mit einem entsprechenden Mitnehmerabschnitt an der Kurvenscheibe an, die ihrerseits mit der Antriebswelle verbunden ist, also über die Antriebswelle in beide Richtungen gedreht werden kann. Die Finger sind in entsprechenden positionsfesten Lagerbuchsen mit entsprechenden Achszapfen drehbar aufgenommen, wobei in diesem Bereich vorzugsweise auch entsprechende Federelemente, die der Vorspannung der Fingermitnehmer gegen die Kurvenscheibe dienen, beispielsweise Schraubenfedern, angeordnet sein können. Wird nun die Kurvenscheibe über die Antriebswelle rotiert, so laufen die Fingermitnehmer auf der Kurvenfläche der Kurvenscheibe entlang, folgen dieser also. Je nach Drehrichtung und Verlauf der Kurvenfläche werden dann zwangsläufig die Finger um die entsprechenden Schwenkachsen verschwenkt, wobei vorzugsweise die Federelemente eine permanente Anlage der Mitnehmerfinger sicherstellen, sofern nicht eine andersartige permanente Mitnehmkopplung zwischen den Fingern und der Kurvenscheibe gegeben ist.

Die Antriebswelle ist wie beschrieben mit permanentem Richtungswechsel zu drehen. Um dies auf einfache Weise zu ermöglichen, ist bevorzugt als Stellmittel ein Zahnstangen-Zahnrad-Mechanismus vorgesehen, wobei die Antriebswelle mit dem Zahnrad gekoppelt ist, das über die linear in beide Richtungen über ein Antriebsmittel bewegbare Zahnstange drehbar ist. Die Zahnstange wird abwechselnd linear in die eine und die andere Richtung verschoben, wobei diese Linearbewegung über das drehbar gelagerte Zahnrad in eine Drehbewegung umgewandelt wird, die sodann auf die gekoppelte Antriebswelle übertragen wird. Auf diese Weise ist ein einfacher, reziproker Wellenantrieb sichergestellt. Anstelle eines Zahnstangen-Zahnrad-Mechanismus können auch andere mechanische Kopplungen, z.B. ein Kurvenscheibenmechanismus oder ein pneumatischer Drehzylinder, oder ein Elektromotor verwendet werden.

Zur Bewegung der Zahnstangen sind unterschiedliche Antriebsweise denkbar. Das Antriebsmittel bzw. die Antriebswelle ist bevorzugt pneumatisch betätigbar, das heißt, dass mit Luftdruck gearbeitet wird. Die Zahnstange ist beispielsweise an einem in einem Zylinder beweglichen Kolben angeordnet, wobei im Zylinder zwei Arbeitsräume vorgesehen sind, in die Luft eingebracht werden kann. Je nachdem, welcher Arbeitsraum unter Druck gesetzt wird, wird der Kolben und damit die Zahnstange in die eine oder andere Richtung bewegt. Es ist also ein Doppelzylinder bzw. ein Zylinder mit zwei Arbeitsräumen vorgesehen. Alternativ zu einem pneumatischen Betrieb ist natürlich auch ein hydraulischer Betrieb denkbar, auch hier kann der Kolbenmechanismus verwendet werden. Schließlich besteht auch die Möglichkeit einer elektrischen Betätigung des Stellmittels oder Antriebsmittels, das heißt, dass von Haus aus beispielsweise als Stellmittel ein Elektromotor verwendet wird. Dieser kann der Linearbewegung der Zahnstange dienen. Denkbar ist es aber auch, dass er mit einem Antriebsritzel das Zahnrad unmittelbar antreibt, so dass in diesem Fall auf eine Zahnstange verzichtet werden kann. Das oder die Stellmittel sind also entweder pneumatisch, hydraulisch oder elektrisch betätigbar.

Wie beschrieben werden die Gegenstände, insbesondere die Würste, auf einem Transportband angefördert. Üblicherweise wird hierzu insbesondere im Lebensmittelbereich respektive im Bereich der Wurst herstellenden Industrie ein Stollenband verwendet. Dieses umlaufende Band weist eine Vielzahl von in Transportrichtung hintereinander angeordneten Stollen auf, wobei in jedem Stollen eine Wurst aufgenommen ist. Die Würste sind am Stollenband zwangsläufig voneinander beabstandet, der Abstand beträgt üblicherweise mindestens einen, zumeist mehrere Zentimeter. Die Greiferabschnitte sind an der Greifereinrichtung axial hinreichend weit voneinander beabstandet, so dass die Fingerpaare dem Wurstabstand entsprechend positioniert sind und beim Absenken zwischen die Würste gefahren werden können. Nach dem Greifen werden die Würste in der voneinander beabstandeten Position aus den Stollen angehoben. Um die Würste jedoch möglichst kompakt auf der Aufnahmeeinrichtung oder in den Schalen ablegen zu können, sieht eine besonders zweckmäßige Weiterbildung der Erfindung vor, dass die Greiferabschnitte als an wenigstens einer Führung linear bewegbar gelagerte Schlitten, an denen die Fingerpaare vorgesehen sind, ausgeführt sind. Diese lineare Beweglichkeit ermöglicht es, die Schlitten relativ zueinander zu bewegen, so dass sie zwischen einer die Gegenstände aufnehmenden Position, in der die Schlitten längs der Führung voneinander beabstandet angeordnet sind, und einer die Gegenstände abgebenden Position, in der die Schlitten axial zusammengefahren sind, bewegbar sind. Dies geschieht über ein geeignetes Stellmittel, das die Schlittenbewegung erwirkt. Hierüber ist es also möglich, die Schlitten und damit die Finger entsprechend der Antransportposition der Würste für ein optimales Greifen positionieren zu können. Daneben besteht die Möglichkeit, die gegriffenen Würste während des Versetzens zu kompaktieren, also als kompakte Wurstgruppe zusammenzufahren, so dass die Würste unmittelbar aneinander anliegen, und sie in dieser kompakten Form abgelegt oder in die Schale eingelegt werden können. Eine beispielsweise sechs Würste umfassende, antransportierte Wurstgruppe, die beispielsweise aufgrund der Wurstbeabstandung als Gruppe eine Gesamtlänge von 20 cm aufweist, kann aufgrund des Zusammenfahrens und des Aneinanderliegens auf eine kompakte Länge von beispielsweise 12 - 15 cm zusammengefahren werden, je nach Wurstabstand und Wurstkaliber. Diese Kompaktierung erfolgt vorteilhaft während des Versetzens über die Greifereinrichtung, so dass ein äußerst schneller und optimaler Übergabebetrieb möglich ist.

Das Stellmittel selbst umfasst bevorzugt zwei Stellzylinder, wobei die Kolbenstange des einen Stellzylinders mit dem einen äußersten Schlitten und die Kolbenstange des anderen Stellzylinders mit dem anderen äußersten Schlitten gekoppelt ist, und wobei die Schlitten untereinander über Mitnehmereinrichtungen gekoppelt sind. Die beiden Stellzylinder arbeiten in unterschiedliche Richtungen. Wird, ausgehend von der Greifstellung, in der die Schlitten auseinandergefahren sind, die Stellzylinder simultan betätigt, so werden die Kolbenstangen eingezogen und jeweils der äußerste Schlitten mitgenommen. Der äußerste Schlitten läuft auf den nächsten Schlitten und nimmt diesen mit, dieser läuft wiederum auf den folgenden Schlitten und nimmt diesen mit etc., so dass bis zum Erreichen der Endstellung der Kolbenstange alle Schlitten zusammengefahren sind und die kompaktest mögliche Position eingenommen haben. Damit sind auch die Würste kompaktiert. Sollen nach dem Abgeben der Würste die Schlitten wieder auseinandergefahren und in die Greifstellung bewegt werden, so werden die beiden Kolbenstangen wieder ausgefahren. Der äußerste Schlitten bewegt sich als erster, über die Mitnehmereinrichtung ist der nächstfolgende Schlitten gekoppelt und wird sodann mitgenommen, über eine weitere Mitnehmereinrichtung ist wiederum der nächstfolgende Schlitten gekoppelt und wird mitgenommen. Auf diese Weise wird bis zum Erreichen der Endstellung der ausgefahrenen Kolbenstangen jeder Schlitten in seine Greifposition bewegt, ein erneutes Greifen ist möglich. Hierüber ist eine sehr einfache Axialbewegung der Schlitten möglich.

Alternativ zur Verwendung eines zwei Stellzylinder umfassenden Stellmittels wäre ein Spindeltrieb mit einer positionsfesten, beispielsweise über einen Elektromotor in beide Richtungen drehbar antreibbaren Spindel, auf der zwei Spindelmuttern, die drehfest, jedoch auf der Spindelmutter in Längsrichtung beweglich sind, und die jeweils mit einem äußersten Schlitten verbunden sind, denkbar. Je nach Spindelrotation bewegen sich die Muttern in die eine und andere Richtung, so dass jeweils der äußerste Schlitten und über die Mitnehmerkopplung auch die Folgeschlitten entsprechend bewegt werden.

Die Mitnehmereinrichtungen sind zweckmäßigerweise als Mitnehmerbolzen ausgeführt, die die Schlitten verbinden und in am jeweiligen Schlitten ausgebildete Aufnahmen eingreifen. Jeder Mitnehmerbolzen weist beispielsweise einen verbreiterten Kopf auf, mit dem er in der Aufnahme angeordnet ist. Der Mitnehmerbolzen ist beim Zusammenfahren in die Aufnahme bewegbar, beim Auseinanderfahren läuft der verbreiterte Bolzenkopf gegen eine Aufnahmewand, so dass es zu einer Kopplung und damit einer Mitnahme kommt. Hierüber ist eine sehr einfache Bewegungskopplung realisierbar.

Die Schlitten sind wie beschrieben linear beweglich und demzufolge entsprechend linear geführt. Zweckmäßigerweise sind hierfür zwei Führungen in Form von Führungsstangen vorgesehen, die die Schlitten in Ausnehmungen durchsetzen und auf denen die Schlitten gleiten. Eine doppelte Führung ist für eine sichere Linearführung von Vorteil, da ein Verkanten hierüber ausgeschlossen und eine sichere Schlittenbewegung sichergestellt ist.

Die Stellmittel, insbesondere die Stellzylinder, sind auch hier bevorzugt pneumatisch, also über Luftdruck, betätigbar. Alternativ wäre auch ein hydraulischer Betrieb denkbar. Ebenso ist eine elektrische Betätigung denkbar, wobei als Stellmittel in diesem Fall entsprechende Elektromotoren verwendet werden.

Wie vorstehend beschrieben werden die gegriffenen Gegenstände respektive Würste nach dem Versetzen auf einer Auflage auf oder in beispielsweise eine Schale eingelegt. Anschließend fährt die Greifereinrichtung wieder nach oben. Hierbei könnte es passieren, dass eine Wurst an einem Finger haftet und beim nach oben Fahren der Greifereinrichtung ein Stück weit mitgenommen und demzufolge aus ihrer Ablageposition bewegt wird. Dies ist insbesondere dann möglich, wenn die Würste kompaktiert sind, also axial zusammengeschoben sind und aneinander anliegen, da dann die Finger zwischen zwei Würsten angeordnet respektive eingeklemmt sind und zwangsläufig nicht geöffnet werden können, da ansonsten der kompakte Verbund aufgehoben wird. Aber auch wenn die Würste nicht kompaktiert werden, folglich die Finger zum Anheben geöffnet werden, kann es vorkommen, dass die Wurst an einem Finger haften bleibt. Um dies zu vermeiden, sieht eine besonders zweckmäßige Weiterbildung der Erfindung die Anordnung wenigstens einer von oben auf die Gegenstände aufsetzbaren Niederhalteeinrichtung zum Niederhalten der Gegenstände während des Anhebens der Greifereinrichtung vor. Diese Niederhalteeinrichtung, die zweckmäßigerweise zwischen einer angehobenen Stellung, in der sie sich während die Gegenstände gegriffen sind befindet, und einer abgesenkten Stellung, in der sie sich bei geöffneten Fingern nach dem Greifen befindet, bewegbar ist, stellt sicher, dass die Gegenstände, also die Würste, während des Anhebens der Greifereinrichtung respektive des Herausziehens der Finger aus dem Wurstpaket in ihrer Position bleiben. Bevorzugt ist dabei beidseits der Greiferabschnitt der jeweils eine leistenförmige Niederhalteeinrichtung vorgesehen, so dass die abgelegten Würste an beiden Enden niedergehalten werden.

Zum Verstellen der oder jeder Niederhalteeinrichtung ist die respektive jede Niederhalteeinrichtung über ein Stellmittel zwischen der angehobenen und der abgesenkten Position bewegbar. Der Betrieb ist dabei derart, dass unmittelbar mit dem Erreichen der Ablageposition die eine oder die beiden Niederhalteeinrichtungen auf die Würste abgesenkt werden. Mit dem Anliegen an den Wurstoberseiten einher geht ein Anheben der Greifereinrichtung selbst, wobei während der Anhebebewegung die Niederhalteeinrichtung(en) zum Ausgleich der Anhebebewegung weiter abgesenkt werden, so dass sie nach wie vor auf den Wurstoberseiten aufliegen. Dies geschieht, bis die Niederhalteeinrichtung(en) eine maximale Absenkposition erreicht haben. Diese ist derart definiert, dass zu diesem Zeitpunkt sämtliche Finger zwischen den Würsten herausgezogen sind, so dass dann im Rahmen der weiteren Anhebebewegung der Greifereinrichtung auch die Niederhalteeinrichtung(en) angehoben werden und umgehend dann wieder in die angehobene Position zurückbewegt werden. Für diese Verstellbewegung können die Niederhalteeinrichtungen vertikal bewegt werden, denkbar ist es aber auch sie um eine Achse zu verschwenken.

Auch hier ist das oder sind die, die eine oder die beiden Niederhalteeinrichtungen bewegenden, Stellmittel bevorzugt pneumatisch betätigbar, auch ein hydraulischer oder elektrischer Betrieb ist denkbar.

Im Fall eines pneumatischen oder hydraulischen Betriebs ist das pneumatische oder hydraulische Betriebsmittel den entsprechenden Stell- oder Antriebsmitteln zuzuführen. Hierfür ist bevorzugt ein zentrales Verteilermodul vorgesehen, das bevorzugt oberseitig an der Greifereinrichtung angeordnet ist, und an dem Leitungen zum Zuführen eines pneumatischen oder hydraulischen Betriebsmittels anschließbar sind. Von dem Verteilermodul aus laufen entsprechende Verbindungskanäle durch die entsprechenden Bauteile der Greifereinrichtung zu den entsprechenden Stell- oder Antriebsmitteln, um das Betriebsmittel zu verteilen. Alternativ zu solchen integrierten Verbindungskanälen können auch separate Verbindungsleitungen von dem Verteilermodul zu dem jeweiligen Stell- oder Antriebsmittel geführt werden. Auf diese Weise ist ein einfacher zentraler Anschluss vorgesehen, von dem aus die Betriebsmittelverteilung erfolgt.

Neben der Greifereinrichtung selbst betrifft die Erfindung ferner eine Handhabungsvorrichtung nach Anspruch 16 zum Handhaben länglicher flexibler Gegenstände, insbesondere Würste. Diese Handhabungsvorrichtung umfasst wenigstens eine Transportstrecke zum Transportieren der in einer Reihe nebeneinander angeordneten, voneinander in der Reihe beabstandeten Gegenstände, wenigstens eine Greifereinrichtung der vorstehend beschriebenen Art sowie wenigstens eine Aufnahmeeinrichtung, in oder auf die die mittels der Greifereinrichtung gegriffenen Gegenstände in einer Reihe, bei entsprechender Ausgestaltung der Greifereinrichtung bevorzugt unmittelbar benachbart zueinander, ablegbar sind.

Die Transportstrecke ist zweckmäßigerweise ein Stollenband mit in Transportrichtung hintereinander angeordneten Stollen, in denen jeweils ein Gegenstand, insbesondere eine Wurst, aufnehmbar ist.

Die Aufnahmeeinrichtung ist bevorzugt ebenfalls eine Transporteinrichtung mit Aufnahmeelementen, bei denen es sich entweder um entnehmbare Schalen, also Transport- oder Verpackungsschalen handeln kann, in die die Gegenstände respektive Würste eingelegt werden. Alternativ können die Aufnahmeelemente auch entsprechend groß bemessene Stollen, in die das komplette, gegebenenfalls kompaktierte Wurstpaket eingelegt werden kann, sein.

Weiterhin kann bei der erfindungsgemäßen Handhabungsvorrichtung eine roboterartige Bewegungseinrichtung vorgesehen sein, umfassend eine Halteeinrichtung, an der die wenigstens eine Greifereinrichtung angeordnet ist. Über diese Bewegungseinrichtung, z.B. einen Delta-Roboter, ist eine freie Beweglichkeit der Greifereinrichtung im Raum und das Anfahren verschiedener Positionen hochgenau möglich. So kann auf exakte Weise die Greifereinrichtung zur Aufnahme und zur Abgabe positioniert werden. Dabei kann an der Halteeinrichtung nur eine Greifereinrichtung, die z.B. vier, sechs, acht oder mehr Würste gleichzeitig aufnimmt, vorgesehen sein. Alternativ können an der Halteeinrichtung auch zwei oder mehr separat arbeitende Greifereinrichtungen, die bezogen auf die Förderrichtung der Transportstrecke hintereinander oder nebeneinander angeordnet sind, vorgesehen sein. Mittels dieser mehreren separat, jedoch simultan arbeitenden und bewegten Greifereinrichtungen ist eine deutliche Erhöhung des Durchsatzes möglich. Sie werden gleichzeitig über die gemeinsame Bewegungseinrichtung bewegt und positioniert. So können z.B. zwei oder vier Wurstgruppen gleichzeitig gegriffen, versetzt und abgegeben werden. Dabei können die mehreren Greifereinrichtungen in Transportrichtung hintereinander angeordnet sein, alternativ auch, wenn zwei parallele Transporteinrichtungen vorgesehen sind, auch nebeneinander. Auch ist die Bildung z.B. eines in Rechteckform angeordneten Greifereinrichtungblocks denkbar, so dass simultan je zwei Wurstgruppen von zwei parallelen Transporteinrichtungen gegriffen werden können. Bei Anordnung der Greifereinrichungen nebeneinander entspricht die Anzahl der Transportstrecken, worunter letztlich jeweils eine angeförderte, handzuhabende Wurstreihe zu verstehen ist, der Anzahl an Greifereinrichtungen. D.h., dass mehrere, parallel auf einer gemeinsamen Transporteinrichtung wie einem Transportband angeförderte, Wurstreihen entsprechend mehrere Transportstrecken darstellen. Ähnlich können auch mehrere Aufnahmeeinrichtungen vorgesehen sein, in die bzw. auf die die Wurstpakete abgegeben werden können, wobei auch diese mehreren Aufnahmeeinrichtungen an einer gemeinsamen Transporteinrichtung, z.B. einem gemeinsamen Transportband, ausgebildet sein können.

Weiterhin betrifft die Erfindung ein Verfahren nach Anspruch 22 zum Betrieb einer Handhabungsvorrichtung der beschriebenen Art. Dieses zeichnet sich dadurch aus, dass die in einer Reihe auf der Transporteinrichtung angeförderten, voneinander beabstandeten Gegenstände mit der Greifereinrichtung gegriffen, angehoben und versetzt werden, wonach die Gegenstände in oder auf die Aufnahmeeinrichtung abgelegt werden.

Besonders bevorzugt werden die Gegenstände während der Anhebe- und Versetzbewegung mittels der Greifereinrichtung in Anlage aneinander zur Kompaktierung der Gegenstands- oder Wurstgruppe bewegt.

Die Gegenstände werden mittels der Greifereinrichtung aus den einzelnen Stollen der als Stollenband ausgeführten Transporteinrichtung entnommen und können in eine auf der Aufnahmeeinrichtung vorgesehene Schale oder einen entsprechend bemessenen Stollen eingelegt werden.

Weitere Vorteile und Einzelheiten der vorliegenden Erfindung ergeben sich aus den im Folgenden beschriebenen Ausführungsbeispielen sowie den zugehörigen Zeichnungen. Dabei zeigen:
- Fig. 1: eine Perspektivansicht einer erfindungsgemäßen Greifereinrichtung mit geöffneten Fingerpaaren,
- Fig. 2: die Greifereinrichtung aus Fig. 1 in der auf die zu greifenden Würste abgesenkten, diese jedoch noch nicht greifenden Positionen,
- Fig. 3: die Anordnung aus Fig. 2 mit in der Greifstellung befindlichen Fingern,
- Fig. 4: die Anordnung aus Fig. 3 mit den gegriffenen Würsten in der angehobenen Position,
- Fig. 5: die Anordnung aus Fig. 4 mit zusammengeschobenen Würsten in der Übergabeposition,
- Fig. 6: die Anordnung aus Fig. 5 in der angehobenen Löseposition mit herausgezogenen Fingern und abgesenkten Niederhalteeinrichtungen,
- Fig. 7: die Anordnung aus Fig. 6 mit von der kompaktierten Wurstgruppe entfernter Greifereinrichtung,
- Fig. 8: eine Längsschnittansicht durch die Greifereinrichtung entlang der Mittelachse (Linie VIII-VIII in Fig. 2),
- Fig. 9: eine Schnittansicht entlang der Linie IX-IX in Fig. 1 durch das Stellmittel zum Antreiben einer Antriebswelle für die Fingerbewegung in einer ersten Position,
- Fig. 10: das Stellmittel aus Fig. 9 in der zweiten Stellposition,
- Fig. 11: eine Perspektivansicht eines Greiferabschnitts mit geöffneten Fingern,
- Fig. 12: den Greiferabschnitt aus Fig. 11 mit zusammengeschwenkten, in der Greifstellung befindlichen Fingern,
- Fig. 13: eine Längsschnittansicht (ebenfalls Linie VIII-VIII in Fig. 2) durch die Greifereinrichtung entsprechend Fig. 8, jedoch mit axial zusammengefahrenen Greifabschnitten und kompaktierter Wurstgruppe,
- Fig. 14: eine geschnittene Aufsicht auf die Greifereinrichtung mit auseinandergefahrenen Greiferabschnitten entsprechend Fig. 8,
- Fig. 15: eine Aufsicht entsprechend Fig. 14 mit zusammengefahrenen Greiferabschnitten entsprechend Fig. 13,
- Fig. 16: eine Perspektivansicht der Greifereinrichtung mit geschnittener Darstellung (Linie XVI-XVI in Fig. 1) des Stellmittels für eine Niederhalteeinrichtung in angehobener Position, und
- Fig. 17: die Anordnung aus Fig. 16 mit abgefahrener Niederhalteeinrichtung.

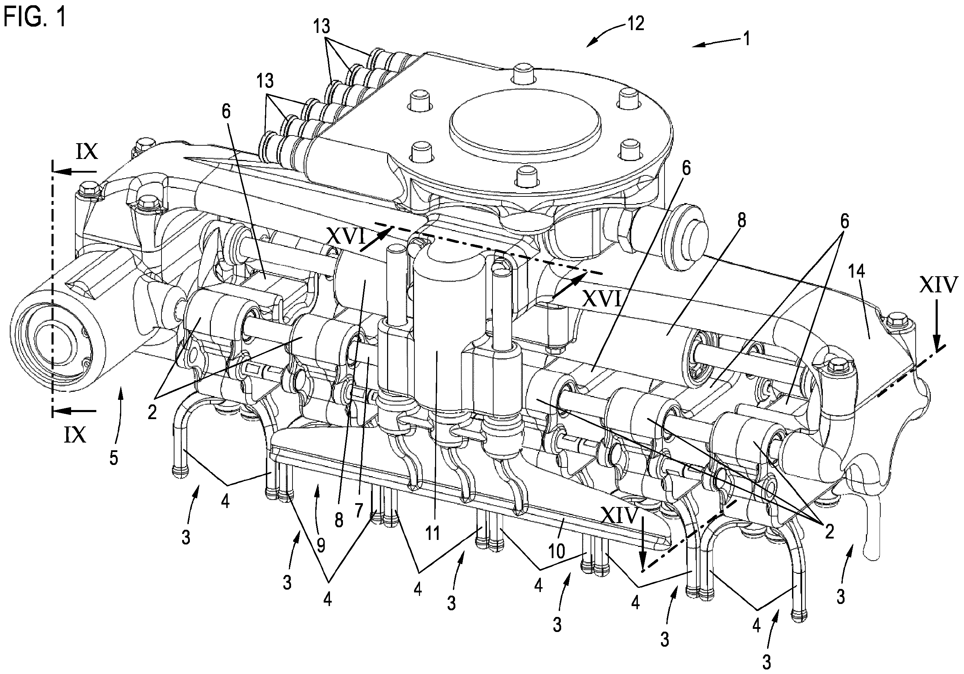

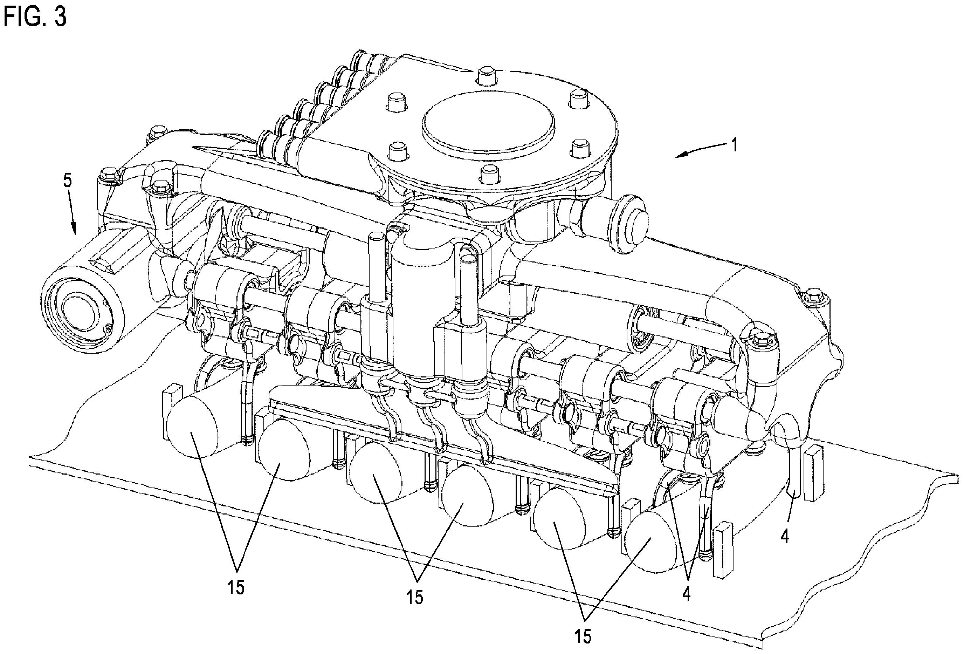

Fig. 1 zeigt eine erfindungsgemäße Greifereinrichtung 1 zum Greifen länglicher, flexibler Gegenstände, im vorliegenden Fall von Würsten. Die Greifereinrichtung 1 umfasst mehrere parallel zueinander angeordnete Greiferabschnitte 2, von denen im gezeigten Beispiel insgesamt sechs vorgesehen sind, wobei in Fig. 1 nur fünf sichtbar sind. Jeder Greiferabschnitt weist zwei voneinander beabstandete schwenkbare Fingerpaare 3 jeweils umfassend zwei schwenkbare Finger 4 auf, wobei in der Perspektivansicht gemäß Fig. 1 nur die vordere Fingerreihe gezeigt ist, die hintere Fingerreihe ist weitgehend verdeckt. Die Finger 4 können, worauf nachfolgend noch eingegangen wird, um entsprechende vertikal stehende Schwenkachsen aus der in Fig. 1 gezeigten offenen Stellung in die beispielsweise in Fig. 3 gezeigte geschlossene, greifende Stellung verschwenkt werden, um die Würste zu greifen. Um diese Verschwenkbewegung vorzunehmen, ist ein Stellmittel 5 vorgesehen, das nachfolgend noch näher beschrieben wird, über welches ein in Fig. 1 nicht näher dargestelltes Antriebsmittel in Form einer Antriebswelle gedreht wird, mit der die Finger 4 gekoppelt sind.

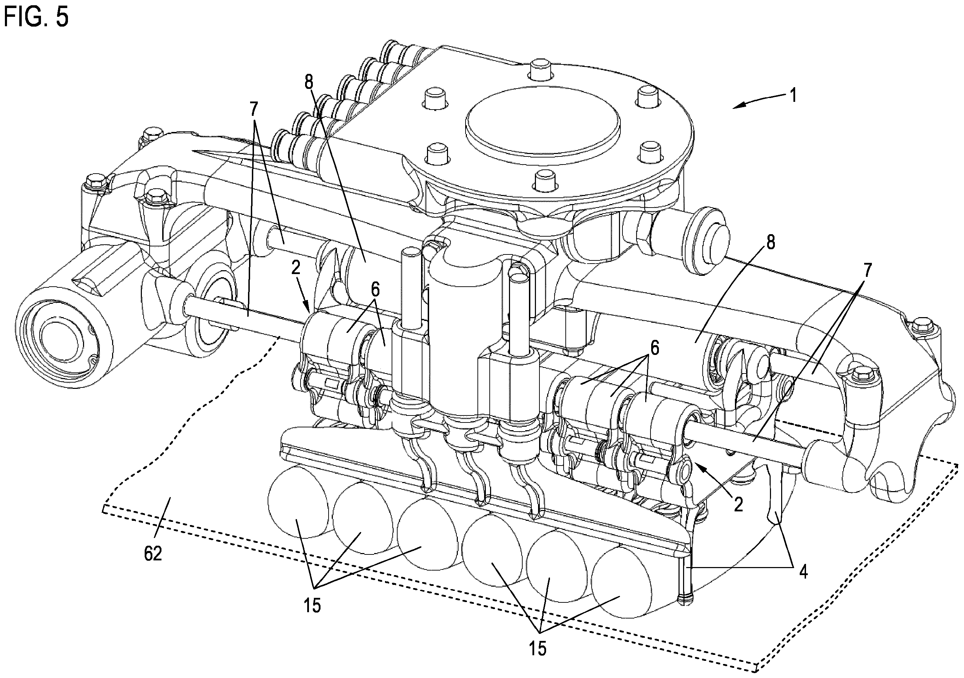

Die Greiferabschnitte 2 sind als Schlitten 6 ausgeführt, was es ermöglicht, sie auf Führungen 7, von denen zwei parallel verlaufende in Form von entsprechenden Führungsstangen vorgesehen sind, axial verschiebbar zu führen, so dass sie aus der in Fig. 1 gezeigten auseinandergefahrenen Stellung, in der die noch voneinander beabstandeten Würste aufgenommen und gegriffen werden können, in eine zusammengefahrene Stellung, in der die Würste eng benachbart bzw. aneinander liegend kompaktiert sind, verschoben werden können, wie exemplarisch in Fig. 5 gezeigt. Auch hierfür ist ein Stellmittel 8 umfassend zwei Stellzylinder, die nachfolgend noch beschrieben werden, vorgesehen, über das der Linearverschub der Schlitten 6 und damit der Greiferabschnitt 2 erfolgen kann.

Des Weiteren sind zwei Niederhaltereinrichtungen 9, die quasi in Längsrichtung der Greifereinrichtung verlaufen, und die beidseits vorgesehen sind, vorgesehen, wobei die Niederhaltereinrichtung 9 in Form von länglichen Leisten 10 realisiert sind. Diese Niederhaltereinrichtungen 9 sind vertikal auf- und abbewegbar, wozu jede Niederhaltereinrichtung 9 über ein entsprechendes weiteres Stellmittel 11, von denen in Fig. 1 ebenfalls nur das eine gezeigt ist, linear bewegbar ist.

Bei den Stellmitteln 5, 8 und 11 handelt es sich bevorzugt um pneumatische Stellmittel in Form von Zylinder-Kolben-Anordnungen respektive Stellzylindern. Um diese entsprechend zu betätigen, ist ein Verteilermodul 12 vorgesehen, an dem im gezeigten Beispiel insgesamt sechs Druckluftanschlüsse 13 vorgesehen sind, wobei die Druckluft über das Verteilermodul und entsprechende, nicht näher gezeigte Kanäle oder Leitungen zu den entsprechenden Stellmitteln 5, 8 und 11 verteilt werden. Über nicht näher gezeigte, vorgeschaltete Stellventile wird der jeweilige Druckluftanschluss 13 bedient, so dass das entsprechende Stellmittel 5, 8, 11 angesteuert wird.

Das Verteilermodul 12 ist an einem hinreichend dimensionierten, zentralen Rahmen- oder Trägerbauteil 14 angeordnet, an den auch die weiteren relevanten Komponenten wie die Stellmittel 5, 8, 11, die beiden Führungen 7 etc. angeordnet sind, und in dem gegebenenfalls auch zumindest zum Teil die entsprechenden Druckluftkanäle ausgebildet sind.

In Fig. 1 nicht dargestellt ist die entsprechende Bewegungsmechanik, mit der die Greifereinrichtung 1 im Raum zu bewegen ist. Hierzu ist bevorzugt eine Bewegungsmechanik in Form eines Delta-Roboters vorgesehen, der eine geeignete Montage- oder Halterungsaufnahme, an der die Greiferenrichtung 1 zu befestigen ist, aufweist, wobei die Montage- oder Halterungsaufnahme an mehreren daran schwenkbar gelagerten Streben, die separat an oberen Führungen bewegbar sind, angeordnet ist. Die Streben sind separat über entsprechende Stellmittel, in der Regel Motoren, bewegbar bzw. in ihrer räumlichen Position verstellbar, worüber sich auch die Raumposition der Greifereinrichtung 1 ändert. Über diese Streben- oder Delta-Anordnung kann also durch entsprechendes Verschieben der gelenkig angebundenen Streben im Raum die räumliche Position der Greifereinrichtung 1 sowohl in der Vertikalen als auch der Horizontalen variiert werden.

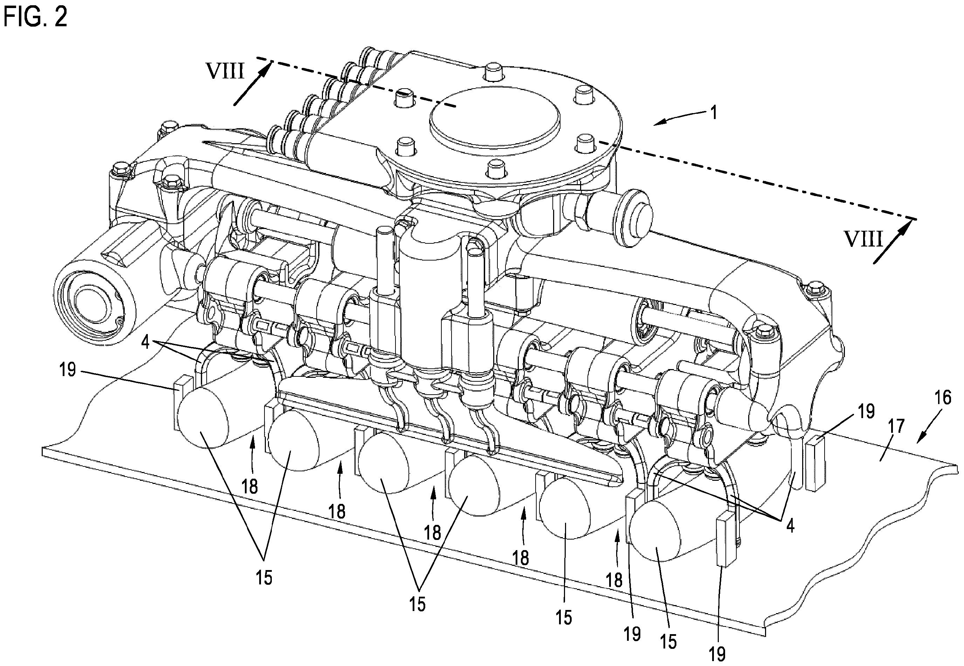

Fig. 2 zeigt die erfindungsgemäße Greifereinrichtung 1 in der zum Aufnehmen von hier insgesamt sechs Würsten 15 dienenden abgesenkten Position. Die Würste 15 sind auf einer ersten Transporteinrichtung 16 in Form eines Stollenbandes 17 mit einer Vielzahl von parallel verlaufenden, hintereinander angeordneten Stollen 18, die über entsprechende Stollenbegrenzungen 19 voneinander beabstandet sind, angeordnet und soweit als möglich hinsichtlich ihrer Wölbungen gleich ausgerichtet. Die Transporteinrichtung 16 ist Teil einer die Würste behandelnden Handhabungsvorrichtung, Teil welcher auch die Greifereinrichtung 1 und eine noch zu beschreibende Aufnahmevorrichtung bzw. zweite Transporteinrichtung 62 ist.

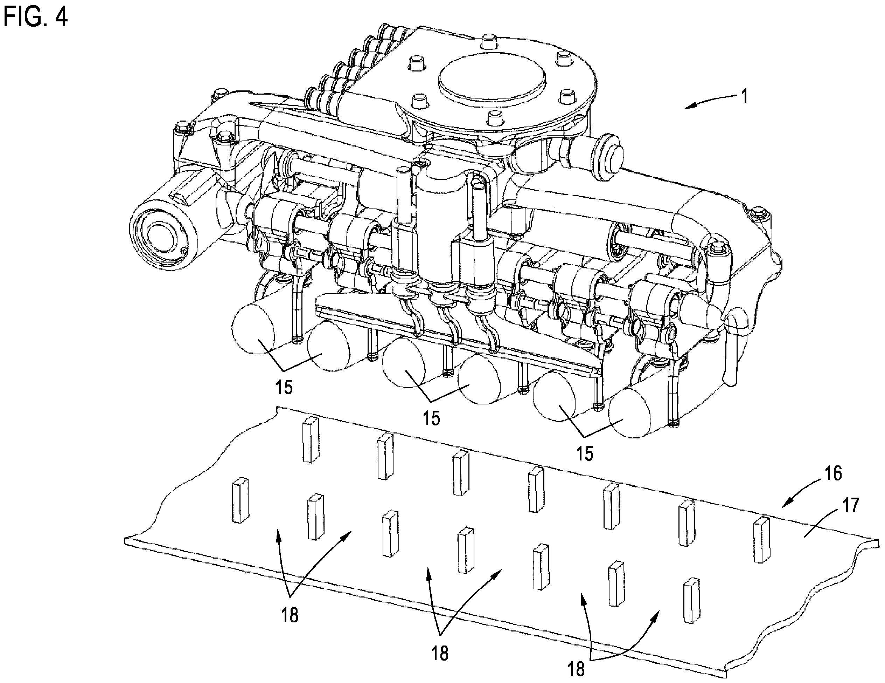

Zum Aufnehmen der Wurstgruppe wird die Greifereinrichtung 1 vertikal nach unten gefahren, so dass die Finger 4, wie Fig. 2 anschaulich zeigt, zwischen die voneinander beabstandeten Würste 15 einfahren und jedes Fingerpaar 3 an den gegenüberliegenden Seiten einer Wurst positioniert ist. Ausgehend von dieser in Fig. 2 gezeigten Position werden nun durch Ansteuerung des Stellmittels 5 die Finger 4 zueinander um die entsprechenden Schwenkachsen simultan verschwenkt, so dass sie gegen die Seiten der Würste 15 gedrückt werden. Die Würste 15 werden damit im Bereich des vorderen und hinteren Endes über jedes Fingerpaar geklemmt und gegriffen, mithin also fixiert. Nach dem in Fig. 3 gezeigten Greifvorgang wird nun die Greifereinrichtung 1, siehe Fig. 4, vertikal angehoben, so dass die fest fixierten Würste 15 vertikal mit nach oben genommen und aus den Stollen 18 nach oben heraus gezogen werden, das Stollenband 17, das während des Greif- und Aushebevorgangs entweder weiterläuft oder kurz steht, wird also frei gemacht und kann weiter fördern.

Die Greifereinrichtung 1 wird nun in Richtung einer Aufnahmeeinrichtung, hier einer zweiten Transporteinrichtung 62, die hier nur angedeutet ist und an oder auf der die Würste abzulegen sind, transportiert. Bei dieser zweiten Transporteinrichtung 62 kann es sich beispielsweise um ein Transportband, auf dem Transport- oder Verpackungsschalen an- und abgefördert werden, die mit den Würsten 15 zu befüllen sind, handeln.

Während dieser Transportbewegung der Greifereinrichtung 1 werden nun, siehe Fig. 5, die Schlitten 6 durch Ansteuerung der Stellmittel 8 auf den beiden Führungen 7 axial zusammengeschoben, wie Fig. 5 anschaulich zeigt. Das heißt, dass die einzelnen Greifereinrichtungen 2 axial zusammengefahren werden, was dazu führt, dass die Würste 15 ebenfalls zusammengeschoben werden, also ein kompaktes Wurstpaket bilden, in dem die Würste 15 unmittelbar aneinander anliegen. Die Finger 4 greifen die Würste 15 nach wie vor und liegen im mittleren Bereich zwischen zwei benachbarten Würsten.

In dieser in Fig. 5 gezeigten, zusammengefahrenen Position wird die Greifereinrichtung 1 nun auf die zweite Transporteinrichtung 62 abgesenkt und beispielsweise in die Aufnahme- oder Verpackungsschale eingesetzt.

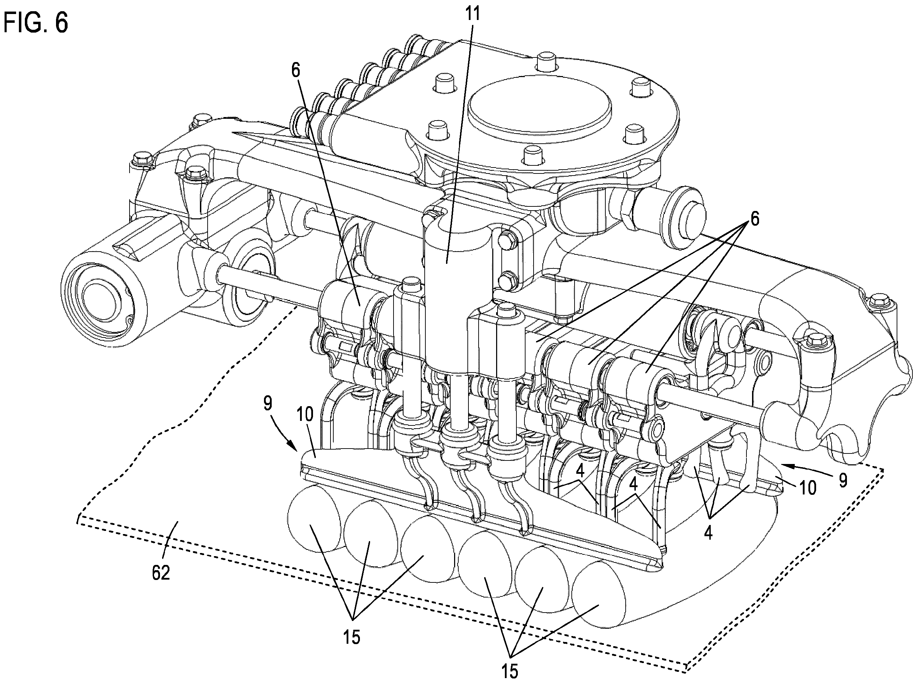

Um die Würste 15 nun in dieser Abgabeposition freizugeben, ist es erforderlich, die Greifereinrichtung 1, siehe Fig. 6, anzuheben, so dass die nach wie vor zueinander geschwenkten Finger 4 aus ihrer Klemmposition zwischen bzw. an den Würsten 15 hochgezogen werden, die Schlitten 6 sind nach wie vor in der zusammengeschobenen Position. Die Finger 4 selbst sind bevorzugt aus einem nicht oder möglichst wenig an den Würsten bzw. den Wursthüllen haftendem Material, vorzugsweise Kunststoff, insbesondere PTFE, PE, PP, POM, oder einem Edelstahl.

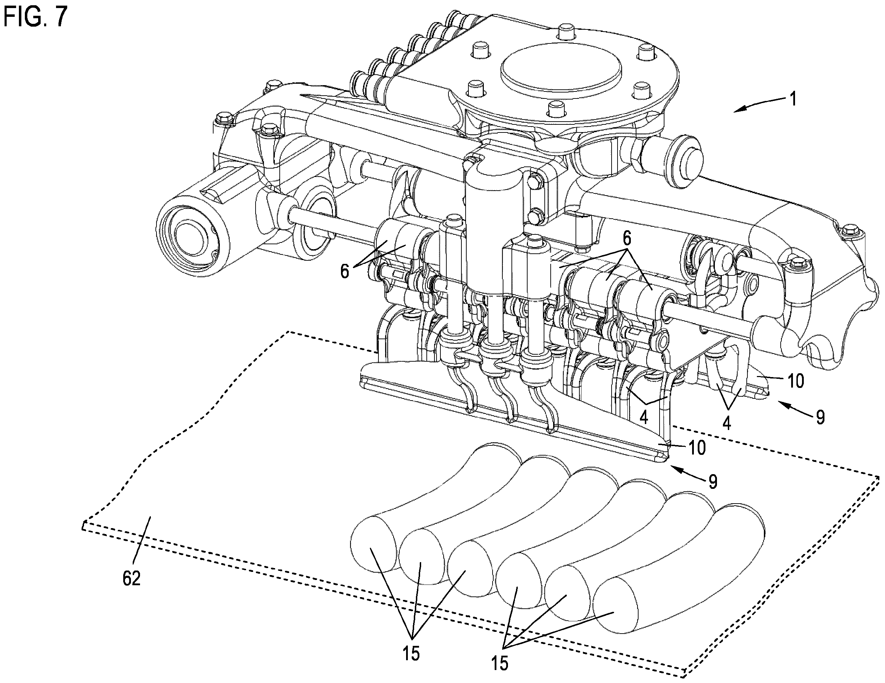

Damit sichergestellt ist, dass bei diesem Herausziehen der geklemmten Finger 4 - trotz deren möglichen Ausbildung aus dem gering haftenden Material - die Würste 15 nicht mitgenommen werden, fahren zeitgleich mit dem Anheben der Greifereinrichtung 1 die beiden Niederhalteeinrichtungen 9, also die beidseitigen Leisten 10 nach unten, wozu das entsprechende Stellmittel 11 angesteuert wird. Die Leisten 10 liegen oberseitig auf den Würsten 15 auf, der Leistenvorschub kompensiert die Anhebestrecke der Greifereinrichtung, bis die Finger 4 vollständig aus dem Wurstpaket herausgezogen sind. Anschließend ist das Wurstpaket freigegeben und ändert bei einer weiterführenden Bewegung der Greifereinrichtung 1, die nun, siehe Fig. 7, wieder zurück in die Aufnahmestellung bewegt wird, ihre Position nicht. Während der Rückbewegung der Greifereinrichtung 1 fahren die beiden Leisten 10 wieder nach oben, gleichzeitig werden auch die Schlitten 6 wieder axial auseinandergefahren und die Finger 4 wieder auseinandergeschwenkt, so dass die in Fig. 1 gezeigte Aufnahmekonfiguration wieder eingenommen wird und ein neuer Aufnahmezyklus beginnen kann.

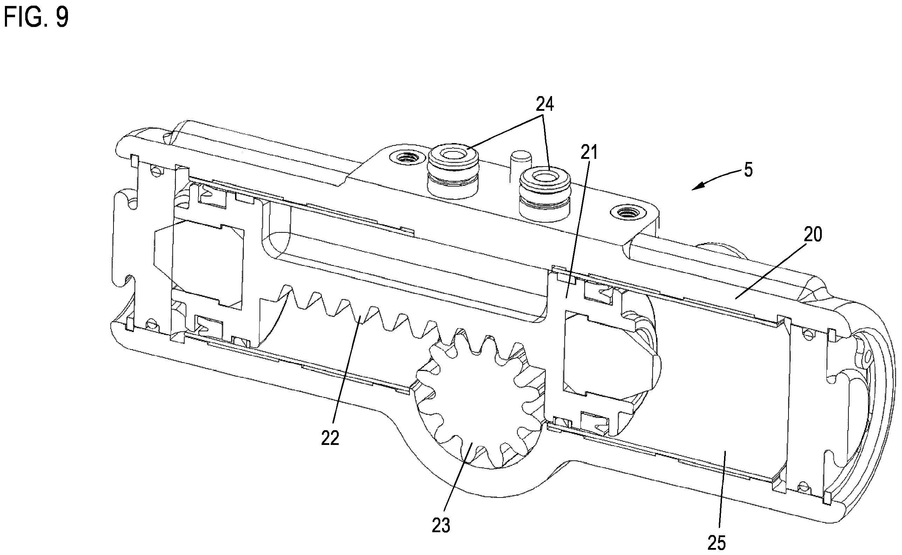

Fig. 9 zeigt in einer vergrößerten, geschnittenen Detailansicht das Stellmittel 5, das zum Verschwenken der Finger 4 um ihre vertikalen Schwenkachsen dient.

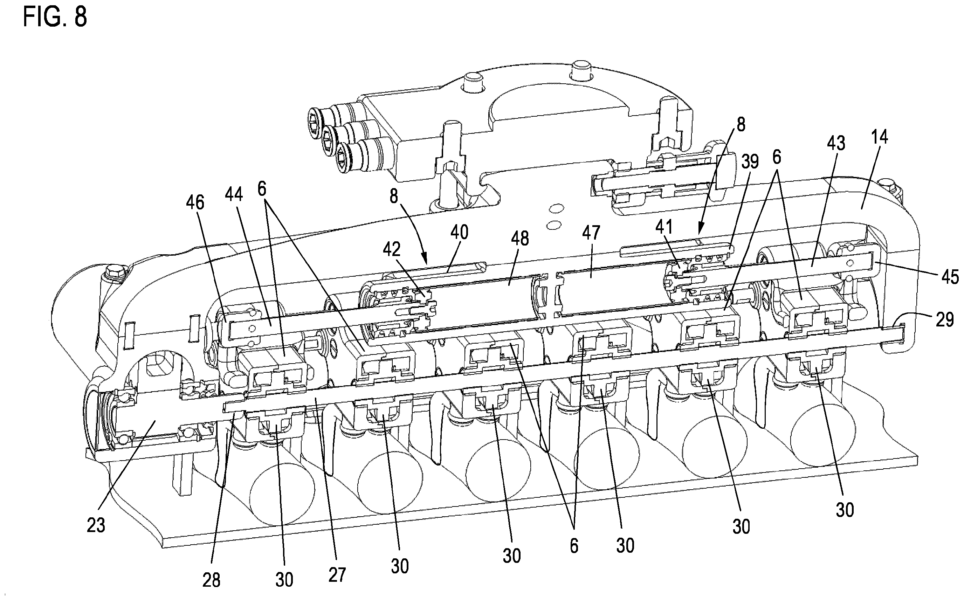

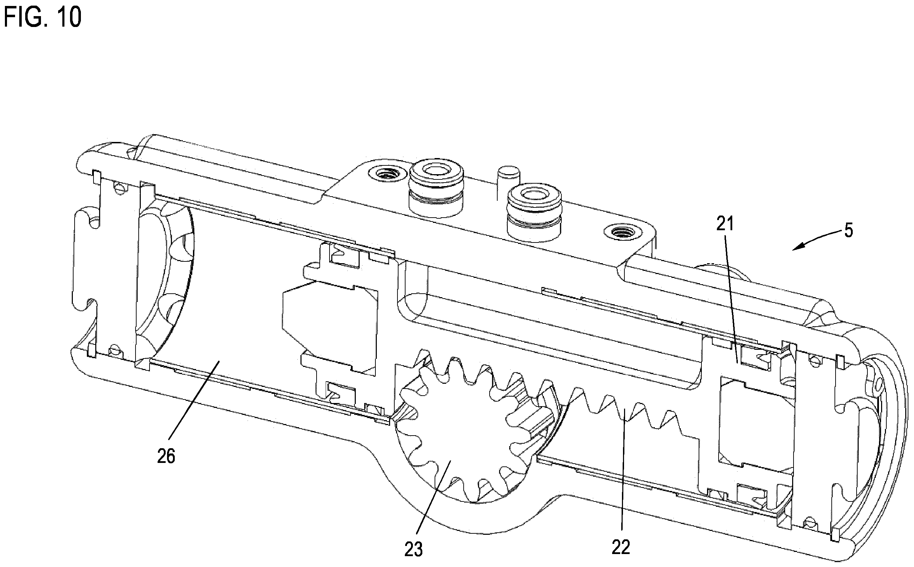

Das Stellmittel 5 weist einen Zylinder 20 auf, in dem ein beweglicher Kolben 21 aufgenommen ist, der eine Zahnstange 22 aufweist. Vorgesehen ist des Weiteren ein drehbar gelagertes Zahnrad 23, dessen Verzahnung mit der Verzahnung der Zahnstange 22 kämmt. Die zum Verschieben des Kolbens 21 im Zylinder 20 dienende Druckluft wird über entsprechende Zuleitungen 24 zugeführt, wobei je nach Bewegungsrichtung des Kolbens 21 und damit der Zahnstange 22 die Druckluft in die eine Zylinderkammer 25 (Fig. 9) oder in die andere Zylinderkammer 26 (Fig. 10) geführt wird. Dies führt dazu, dass es, siehe die Fig. 9 und 10, zu einer linearen Verschiebebewegung des Kolbens 21 und damit der Zahnstange 22 kommt. Diese Linearbewegung führt zwangsläufig wiederum zu einer Rotation des Zahnrads 23, das wie beschrieben mit der Zahnstange 22 kämmt. Mit dem Zahnrad 23 ist nun, siehe die Längsschnittansicht gemäß Fig. 8, ein Antriebsmittel in Form einer Antriebswelle 27 verbunden, die in einer entsprechenden Halteaufnahme 28 eines Verbindungszapfens des Zahnrades 23 eingesetzt ist und mit ihrem anderen Ende in einer Lageraufnahme 29 des Trägers 14 drehgelagert ist. Die Antriebswelle 27 erstreckt sich durch sämtliche Schlitten 6, wie Fig. 8 anschaulich zeigt. Die Antriebswelle 27 ist bevorzugt als Vier- oder Mehrkantwelle ausgeführt, auf die die entsprechenden Schlitten 6 aufgeschoben sind.

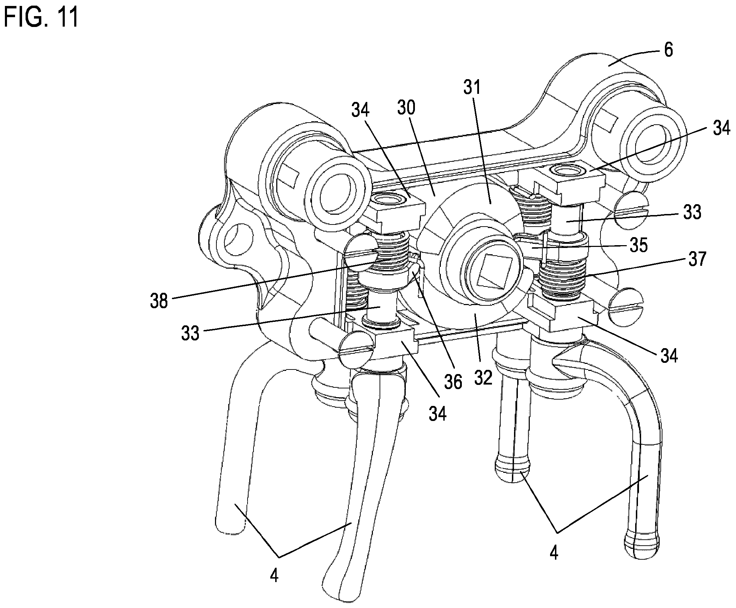

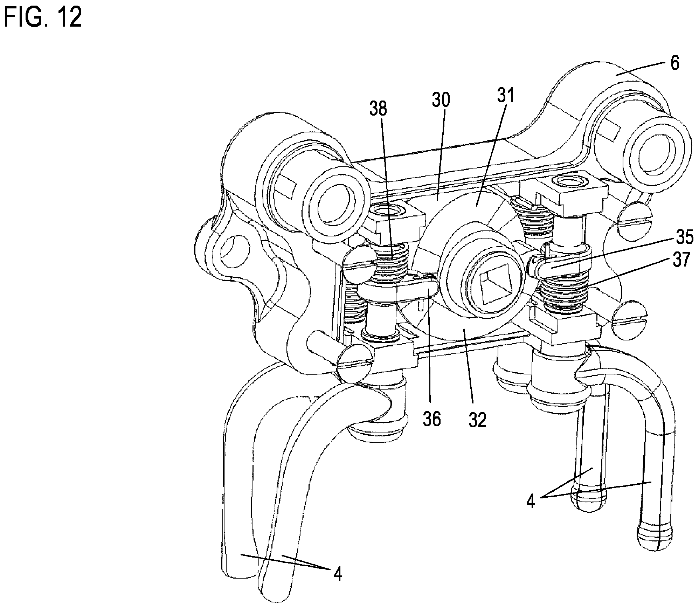

Auf der Antriebswelle 27 sitzt des Weiteren in jedem Schlitten 6 eine Kurvenscheibe 30, die drehfest auf der Antriebswelle sitzt, mithin also bei einer Rotation der Antriebswelle 27 ebenfalls dreht, die jedoch zur Ermöglichung der Axialverschiebung der Schlitten 6 auf der Antriebswelle 27 gleiten kann. Die einzelnen Kurvenscheiben 30 dienen der Steuerung der simultanen Schwenkbewegung der Finger 4, wie anhand der Fig. 11 und 12 gezeigt ist.

Jede Kurvenscheibe hat an jeder Seite zwei Führungsflächen 31, 32, die eine definierte Steigung aufweisen und sich jeweils um ca. 180° erstrecken. Diese Führungsflächen 31, 32 sind, wie beschrieben, an beiden Seiten jeder Kurvenscheibe 30 ausgebildet.

Die Finger 4 sind, siehe Fig. 11, am Schlitten 6 über entsprechende Lagerzapfen 33 in entsprechenden Schwenkaufnahmen 34 um eine Vertikalachse schwenkbar gelagert. Jedem Finger 4 zugeordnet ist jeweils ein seitlich vorspringender Mitnehmer 35, 36, der jeweils über ein Federelement 37, 38 gegen die entsprechende Kurvenfläche 31, 32 gespannt ist. Das heißt, dass die Federelemente 37, 38 die Finger stets gegen die Kurvenflächen 31, 32 und damit letztlich in die auseinandergeschwenkte Stellung anfedern.

Wie Fig. 11 bereits andeutet, ist jeder Finger 4 über einen separaten Lagerzapfen 33 schwenkgelagert und verfügt über einen eigenen Mitnehmer 35, 36 sowie ein separates Federelement 37, 38, gleichwohl sind alle Finger 4 über eine gemeinsame Kurvenscheibe 30 bewegungsgekoppelt.

Wird nun ausgehend von der in Fig. 11 gezeigten, auseinandergeschwenkten Fingerposition über das Stellmittel 8 eine Drehung der Antriebswelle 27, vorzugsweise um ca. 160°, erwirkt, so führt dies zu einer Drehung der Kurvenscheibe 30. Die Mitnehmer 35, 36 laufen auf den Kurvenflächen 31, 32 auf, werden also, vgl. Fig. 11 mit Fig. 12, nach außen gegen die Rückstellkraft des jeweiligen Federelements 37, 38 gedrückt. Damit einher geht aufgrund der gewinkelten oder gebogenen Form der einzelnen Finger 4 deren entsprechende Schwenkbewegung aufeinander zu, das heißt, dass sich der Abstand der Finger 4 zueinander verringert. Befindet sich nun zwischen den vormals geöffneten Fingern 4 eine Wurst, so wird diese zwangsläufig von den Fingern 4 seitlich gegriffen und geklemmt.

Bei einer Rotation der Antriebswelle 27 in die andere Richtung, wozu das Stellmittel 8 entsprechend umgesteuert und Druckluft in die anderen Zylinderkammer gedrückt wird, dreht die Kurvenscheibe 30 wieder zurück, so dass die Mitnehmer 35, 36 auf den Kurvenflächen 31, 32 wieder herunterlaufen und die Finger 4 wieder in die in Fig. 11 gezeigte offene Stellung aufschwenken.

Da auf der Antriebswelle 27 alle Kurvenscheiben 30 aller Schlitten 6 gemeinsam sitzen, führt eine Rotation der Antriebswelle 27 zwangsläufig zu einer simultanen Schließ- und Öffnungsbewegung aller Fingerpaare und damit zwangsläufig zu einem simultanen Greifen und Abgeben aller Würste.

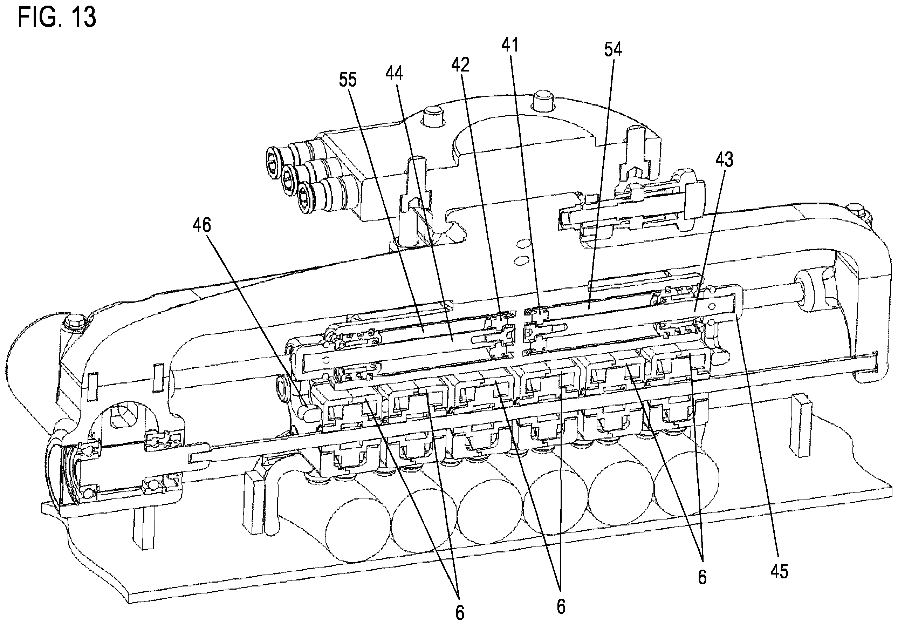

Zur näheren Erläuterung des axialen Verschiebemechanismus dienen die Fig. 8 und 13. In der in Fig. 8 gezeigten Längsschnittdarstellung sind die Schlitten 6 axial auseinandergeschoben, während sie in Fig. 13 axial zusammengefahren sind. Hierzu dienen wie beschrieben die Stellmittel 8, hier in Form von zwei entgegengesetzt zueinander angeordneten Stellzylindern 39, 40, in denen jeweils ein Kolben 41, 42 mit einer Kolbenstange 43, 44 aufgenommen ist. An der jeweiligen Kolbenstange 43, 44 ist endseitig jeweils eine Halterung 45, 46 angeordnet, die mit dem jeweils äußersten Schlitten 6 der Schlittenreihe fest verbunden ist.

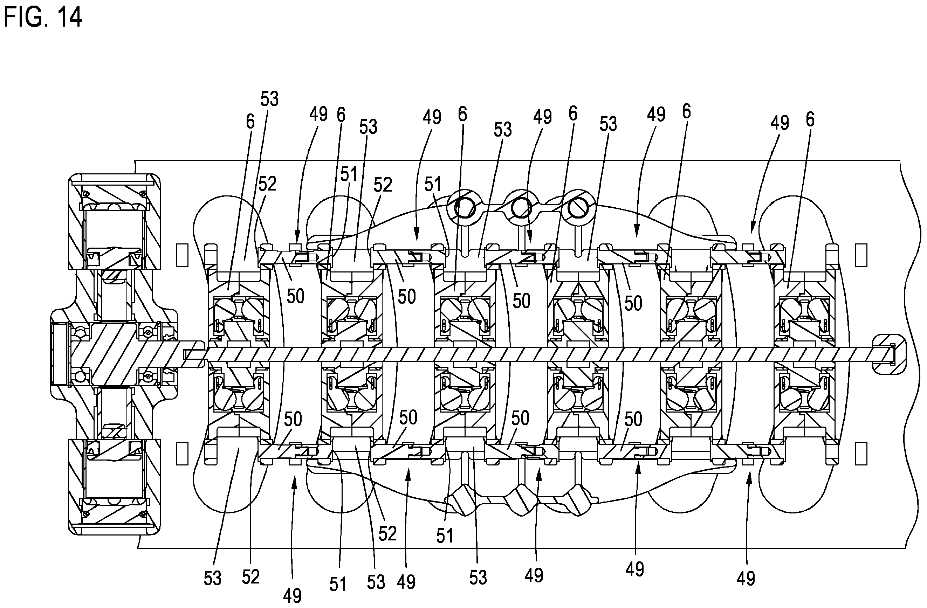

Um in die in Fig. 8 gezeigte auseinandergefahrene Stellung zu gelangen, wird Druckluft in den jeweiligen, axial gesehen inneren Zylinderraum 47, 48 eingedrückt, so dass die Kolben 41, 42 und damit die Kolbenstange 43, 44 in entgegengesetzte Richtungen auseinandergefahren werden. Hierbei wird zwangsläufig der jeweils über die Halterung 45, 46 gekoppelte äußerste Schlitten 6 mitgenommen. Die einzelnen Schlitten 6 sind jedoch untereinander über entsprechende Mitnehmereinrichtungen 49 miteinander bewegungsgekoppelt. Jede Mitnehmereinrichtung 49 umfasst einen Mitnehmerbolzen 50, der beidseits verbreiterte Köpfe 51, 52 aufweist, die in entsprechende Aufnahmen 53 am jeweiligen Schlitten 6 eingreifen, wobei die Mitnehmerbolzen 50 in diesen Aufnahmen 53 verschiebbar sind. In der in Fig. 8 gezeigten auseinandergefahrenen Stellung, zu der die Fig. 14 eine entsprechende geschnittene Aufsicht zeigt, liegen die verbreiterten Köpfe 51, 52 an den entsprechenden, die Aufnahmen 53 begrenzenden Wangen der Schlitten 6 an, das heißt, dass alle Schlitten miteinander bewegungsgekoppelt sind und auseinandergezogen wurden.

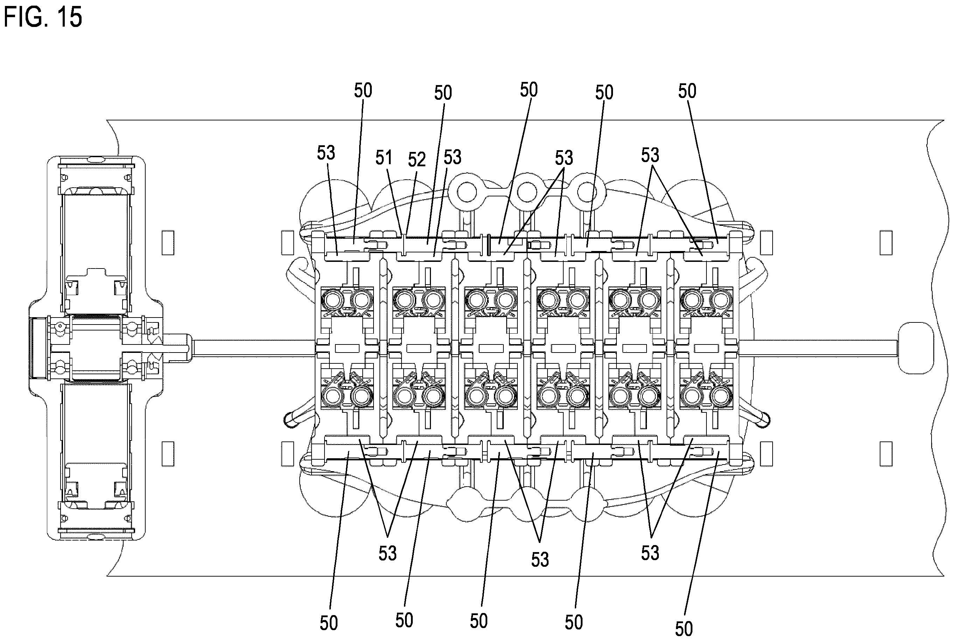

Soll nun ausgehend von dieser auseinandergeschobenen Position nach Aufnehmen und Greifen der Würste 15 das Wurstpaket zusammengeschoben werden, so wird Druckluft in den gegenüberliegenden Zylinderraum 54, 55 respektive in den Bereich der gegenüberliegenden Kolbenseite gedrückt, so dass der jeweilige Kolben 41, 42 in die entgegengesetzte Richtung, also aufeinander zu, bewegt wird. Gleichzeitig werden die Kolbenstangen 43, 44 eingezogen, wie in Fig. 13 gezeigt ist. Die Halterungen 45, 46 nehmen zwangsläufig den daran befestigten, äußersten Schlitten 6 mit. Dieser läuft nun, ausgehend von der Position gemäß Fig. 14, beim Zusammenfahren zunächst gegen den benachbarten Schlitten 6, bei fortgesetzter Bewegung läuft das jeweilige Schlittenpaar sodann auf den wiederum benachbarten Schlitten, bis sämtliche Schlitten 6 aneinander anliegen und zusammengeschoben sind. Während dieser Zusammenschiebebewegung werden die Mitnehmerbolzen 50 in die entsprechenden Aufnahmen 53 eingefahren, wie in Fig. 15 anschaulich gezeigt.

Soll nun nach dem Ablegen des Wurstpakets das Schlittenpaket wieder geöffnet werden, so wird erneut Druckluft auf die gegenüberliegende Kolbenseite, also in den Zylinderaum 47, 48 geblasen, so dass die Kolbenstangen 43, 44 wieder auseinandergefahren werden. Zunächst werden die beiden äußersten Schlitten 6 mitgenommen, die entsprechenden Mitnehmerbolzen 50 werden aus den Aufnahmen 53 der benachbarten Schlitten 6 herausbewegt, bis die verbreiterten Köpfe 51, 52 an den Aufnahmewänden anschlagen, so dass der nächste Schlitten 6 mitgenommen und auseinandergezogen wird, was dann mit dem wiederum benachbarten Schlitten in gleicher Weise passiert, bis alle Schlitten 6 auseinandergezogen sind. Auf diese Weise kann eine sehr einfache und schnelle Axialverschiebung zum Bewegen der Greiferabschnitte 2 erfolgen. Die Schlitten 6 sind hierbei auf den stangenartigen Führungen 7 geführt, die die Schlitten 6 in einsprechenden Ausnehmungen durchsetzen.

Wie vorstehend ausgeführt, dienen die beiden Niederhalteeinrichtungen 9 dazu, das kompaktierte Wurstpaket in der Abgabestellung zu fixieren, so dass durch Anheben der Greifereinrichtung ein bei gleichzeitigem Absenken der Niederhalteeinrichtungen 9 die Finger 4 aus ihrer Position zwischen den einzelnen Würsten 15 herausgezogen werden können.

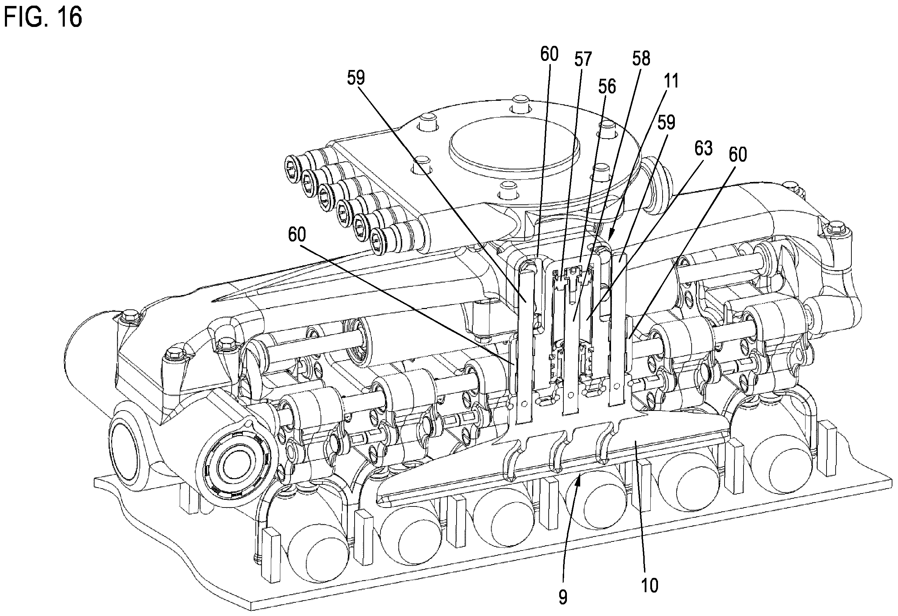

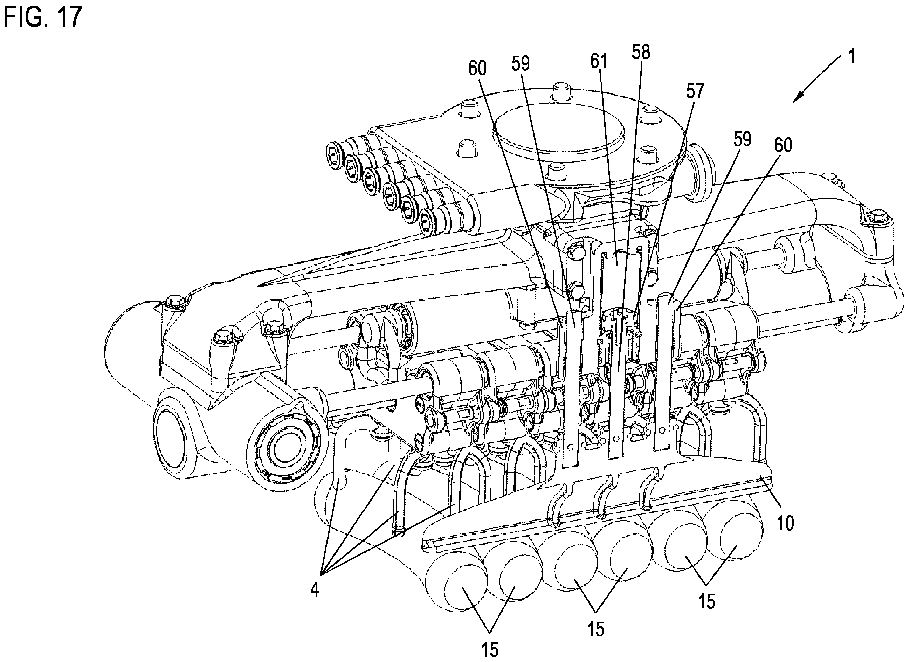

Die Fig. 16 und 17 zeigen entsprechende Schnittansichten durch ein Stellmittel 11 der Niederhalteeinrichtung 9, das zum vertikalen Bewegen der jeweiligen Leiste 10 dient.

Das Stellmittel 11 ist auch hier als Stellzylinder 56 ausgeführt, wobei in dem Zylinder ein Kolben 57 angeordnet ist, mit dessen Kolbenstange 58 die Leiste 10 gekoppelt ist. Die Leiste 10 ist über zwei Führungsstangen 59 in entsprechenden Führungen 60 geführt.

Zum Absenken der Leiste 10 wird nur Druckluft in den oberen Zylinderraum 61 gedrückt, so dass der Kolben 57 und mit ihm die Kolbenstange 58 und mit dieser die Leiste 10 nach unten bewegt wird, während gleichzeitig die Greifereinrichtung 1 insgesamt vertikal nach oben bewegt wird, so dass die Finger 4 aus ihrer Position zwischen den Würsten 15 gezogen werden, ohne der Gefahr, dass hierbei die Würste in ihrer Abgabeposition verändert werden.

Soll aus der abgesenkten Position gemäß Fig. 17 die jeweilige Leiste 10 wieder angehoben werden, so wird Druckluft auf die gegenüberliegende Kolbenseite in den zweiten Zylinderraum 63 eingedrückt, so dass der Kolben 57 und mit ihm die Kolbenstange 58 und mit dieser die Leiste 10 wieder nach oben wandern.

Fig. 16 zeigt die Position der jeweiligen Leiste 10 in der angehobenen Position, die sie während des Aufnehme- und Transportvorgangs einnimmt. Fig. 16 zeigt die Position der Leiste 10 während des Abgabe- und Lösevorgangs, also in der abgesenkten Position. Das Anheben der Greifereinrichtung 1 und das gleichzeitige Absenken der Leisten 10 erfolgt synchron, so dass, bezogen auf die Position der Würste, die Leiste 10 quasi stets in dergleichen Position, nämlich in Anlage an der Wurstoberseite, bleibt, um die Würste niederzuhalten.

Die Greifereinrichtung 1 kann beispielsweise in einer Vorrichtung zum Behandeln einzelner Würste, wie sie in DE 20 2015 104 994 U1 beschrieben ist, verwendet werden, das heißt, dass die Würste 15 über eine entsprechende vorgeschaltete Behandlungsvorrichtung prozessiert und zugeführt werden. Dabei ist es denkbar, der Greifereinrichtung 1 eine Ausrichteinrichtung, mit der die häufig gekrümmten Würste allesamt hinsichtlich der Krümmung in gleicher Richtung ausgerichtet werden, vorgeschaltet sein. Eine solche Ausrichteinrichtung ist in der nachveröffentlichten deutschen Patentanmeldung DE 10 2017 123 517 beschrieben.

## Patentansprüche

1. Greifereinrichtung zum gleichzeitigen Greifen mehrerer länglicher flexibler Gegenstände, insbesondere Würste (15), mit mehreren parallel zueinander angeordneten Greiferabschnitten (2), **dadurch gekennzeichnet, dass** jeder Greiferabschnitt (2) zwei voneinander beabstandete Fingerpaare (3) aufweist, wobei die Finger (4) jedes Fingerpaares (3) einen der Gegenstände (15) an gegenüberliegenden Seiten greifen und simultan zum Greifen des Gegenstands (15) aufeinander zu bewegbar sind, wobei die Finger (4) um eine vertikale Schwenkachse schwenkbar sind und von oben zwischen die Gegenstände bewegbar und durch Verschwenken um die Schwenkachsen von der Seite her gegen die Seiten der Gegenstände bewegbar sind, und wobei die Greiferabschnitte (2) simultan betätigbar sind.

2. Greifereinrichtung nach Anspruch 1, **dadurch gekennzeichnet, dass** jeder Finger (4) um eine Schwenkachse schwenkbar gelagert ist, wobei die Finger (4) mit einem gemeinsamen Antriebsmittel gekoppelt sind.

3. Greifereinrichtung nach Anspruch 2, **dadurch gekennzeichnet, dass** das Antriebsmittel eine über ein Stellmittel (5) um ihre Längsachse in beide Richtungen drehbare Antriebswelle (27) umfasst, mit der die Finger (4) gekoppelt sind.

4. Greifereinrichtung nach Anspruch 3, **dadurch gekennzeichnet, dass** zur Bewegungskopplung der Finger mit der Antriebswelle (27) die Finger (4) jedes Greiferabschnitts (2) mit einer über die Antriebswelle (27) drehbaren Kurvenscheibe (30), gegen die die Finger (4) vorgespannt anliegen, gekoppelt sind.

5. Greifereinrichtung nach Anspruch 3 oder 4, **dadurch gekennzeichnet, dass** das Stellmittel (5) ein Zahnstangen-Zahnrad-Mechanismus (22, 23) ist, wobei die Antriebswelle (27) mit dem Zahnrad (23) gekoppelt ist, das über die linear in beide Richtungen bewegbare Zahnstange (23) drehbar ist.

6. Greifereinrichtung nach einem der vorangehenden Ansprüche, **dadurch gekennzeichnet, dass** die Greiferabschnitte (2) als an wenigstens einer Führung (7) linear bewegbar gelagerte Schlitten (6), an denen die Fingerpaare (3) vorgesehen sind, ausgeführt sind.

7. Greifereinrichtung nach Anspruch 6, **dadurch gekennzeichnet, dass** die Schlitten (6) über ein Stellmittel (8) zwischen einer die Gegenstände (15) aufnehmenden Position, in der die Schlitten (6) längs der Führung (7) voneinander beanstandet angeordnet sind, und einer die Gegenstände (15) abgebenden Position, in der die Schlitten (6) zusammengefahren sind, bewegbar sind.

8. Greifereinrichtung nach Anspruch 7, **dadurch gekennzeichnet, dass** das Stellmittel (8) zwei Stellzylinder (39, 40) umfasst, wobei die Kolbenstange (43) des einen Stellzylinders (39) mit dem einen äußersten Schlitten (6) und die Kolbenstange (44) des anderen Stellzylinders (40) mit dem anderen äußersten Schlitten (6) gekoppelt ist, und wobei die Schlitten (6) untereinander über Mitnehmereinrichtungen (49) gekoppelt sind.

9. Greifereinrichtung nach Anspruch 8, **dadurch gekennzeichnet, dass** die Mitnehmereinrichtungen (49) Mitnehmerbolzen (50), die die Schlitten (6) verbinden und in am jeweiligen Schlitten ausgebildete Aufnahmen (53) eingreifen umfassen.

10. Greifereinrichtung nach einem der Ansprüche 6 bis 9, **dadurch gekennzeichnet, dass** zwei Führungen (7) in Form von Führungsstangen, die die Schlitten (6) in Ausnehmungen durchsetzen und auf denen die Schlitten (6) gleiten, vorgesehen sind.

11. Greifereinrichtung nach einem der vorangehenden Ansprüche, **dadurch gekennzeichnet, dass** wenigstens eine von oben auf die Gegenstände (15) aufsetzbare Niederhalteeinrichtung (9) zum Niederhalten der Gegenstände (15) während des Anhebens der Greifereinrichtung vorgesehen ist.

12. Greifereinrichtung nach Anspruch 11, **dadurch gekennzeichnet, dass** die Niederhalteeinrichtung (9) zwischen einer angehobenen Stellung, in der sie sich während die Gegenstände (15) gegriffen sind befindet, und einer abgesenkten Stellung, in der sie sich bei geöffneten Fingern (15) nach dem Greifen befindet, bewegbar ist.

13. Greifereinrichtung nach Anspruch 11 oder 12, **dadurch gekennzeichnet, dass** beidseits der Greiferabschnitte (2) jeweils eine leistenförmige Niederhalteeinrichtung (9) vorgesehen ist.

14. Greifereinrichtung nach Anspruch 12 oder 13, **dadurch gekennzeichnet, dass** die oder jede Niederhalteeinrichtung (9) über ein Stellmittel (11) zwischen der angehobenen und der abgesenkten Stellung bewegbar ist.

15. Greifereinrichtung nach einem der vorangehenden Ansprüche, **dadurch gekennzeichnet, dass** ein Verteilermodul (12) vorgesehen ist, an dem Leitungen zum Zuführen eines pneumatischen oder hydraulischen Betriebsmittels anschließbar sind, und von dem aus Verbindungskanäle oder -leitungen zu dem oder den Stellmitteln (5, 8, 11) führen.

16. Handhabungsvorrichtung zum Handhaben länglicher flexibler Gegenstände, insbesondere Würste, umfassend wenigstens eine Transportstrecke (16) zum Transportieren der in einer Reihe nebeneinander angeordneten, voneinander in der Reihe beabstandeten Gegenstände (15), wenigstens eine Greifereinrichtung (1) nach einem der vorangehenden Ansprüche sowie wenigstens eine Aufnahmeeinrichtung (62), in oder auf die die mittels der Greifereinrichtung (1) gegriffenen Gegenstände (15) in einer Reihe ablegbar sind.

17. Handhabungsvorrichtung nach Anspruch 16, **dadurch gekennzeichnet, dass** die Transportstrecke (16) ein Stollenband (17) mit in Transportrichtung hintereinander angeordneten Stollen (18) ist.

18. Handhabungsvorrichtung nach Anspruch 16 oder 17, **dadurch gekennzeichnet, dass** die Aufnahmeeinrichtung (62) eine Transporteinrichtung mit Aufnahmeelementen ist, wobei vorzugsweise die Aufnahmeelemente entnehmbare Schalen oder feste Stollen sind.

19. Handhabungsvorrichtung nach einem der Ansprüche 16 bis 18, **dadurch gekennzeichnet, dass** eine roboterartige Bewegungseinrichtung vorgesehen ist, umfassend eine Halteeinrichtung, an der die wenigstens eine Greifereinrichtung (1) angeordnet ist.

20. Handhabungsvorrichtung nach Anspruch 19, **dadurch gekennzeichnet, dass** an der Halteeinrichtung zwei oder mehr separat arbeitende Greifereinrichtungen (1), die bezogen auf die Förderrichtung der Transportstrecke (16) hintereinander oder nebeneinander angeordnet sind, vorgesehen sind.

21. Handhabungsvorrichtung nach Anspruch 20, **dadurch gekennzeichnet, dass** bei Anordnung von zwei oder mehr Greifereinrichtungen (1) nebeneinander auch mehrere, der Anzahl der Greifereinrichtungen entsprechende Transportstrecken (16) und gegebenenfalls Aufnahmeeinrichtungen (62) vorgesehen sind.

22. Verfahren zum Betrieb einer Handhabungsvorrichtung nach einem der Ansprüche 16 bis 21, **dadurch gekennzeichnet, dass** die in einer Reihe auf der Transporteinrichtung (16) angeförderten, voneinander beabstandeten Gegenstände mit der Greifereinrichtung (1) gegriffen, angehoben und versetzt werden, wonach die Gegenstände (15) in oder auf die Aufnahmeeinrichtung (62) abgelegt werden.

## Claims

1. Gripper installation for simultaneously gripping a plurality of elongate flexible items, in particular sausages (15), having a plurality of gripper portions (2) that are disposed so as to be mutually parallel, **characterized in that** each gripper portion (2) has two mutually spaced-apart finger pairs (3), wherein the fingers (4) of each finger pair (3) grip one of the items (15) at opposite sides and for gripping the item (15) are capable of being simultaneously converged, wherein the fingers (4) are pivotable about a vertical pivot axis and capable of being moved from above between the items, and capable of being moved laterally against the sides of the items by pivoting about the pivot axes, and wherein the gripper portions (2) are capable of being simultaneously activated.

2. Gripper installation according to Claim 1, **characterized in that** each finger (4) is mounted so as to be pivotable about a pivot axis, wherein the fingers (4) are coupled to a common drive means.

3. Gripper installation according to Claim 2, **characterized in that** the drive means comprises a driveshaft (27) which by way of an actuation means (5) is rotatable in both directions about the longitudinal axis of said driveshaft (27) and to which the fingers (4) are coupled.

4. Gripper installation according to Claim 3, **characterized in that** the fingers (4) of each gripper portion (2) for coupling the motion of the fingers with the driveshaft (27) are coupled to a cam disc (30) which is rotatable by way of the driveshaft (27) and on which the fingers (4) bear in a pretensioned manner.

5. Gripper installation according to Claim 3 or 4, **characterized in that** the actuation means (5) is a rack- and-pinion mechanism (22, 23), wherein the driveshaft (27) is coupled to the pinion (23) which is rotatable by way of the rack (23) that is movable in a linear manner in both directions.

6. Gripper installation according to one of the preceding claims, **characterized in that** the gripper portions (2) are embodied as slides (6) which are mounted so as to be movable in a linear manner on at least one guide (7) and on which the finger pairs (3) are provided.

7. Gripper installation according to Claim 6, **characterized in that** the slides (6) by means of an actuation means (8) are movable between a position which receives the items (15) and in which the slides (6) are disposed so as to be spaced apart along the guide (7) and a position which dispenses the items (15) and in which the slides (6) are converged.

8. Gripper installation according to Claim 7, **characterized in that** the actuation means (8) comprises two actuation cylinders (39, 40), wherein the piston rod (43) of the one actuation cylinder (39) is coupled to the one outermost slide (6) and the piston rod (44) of the other actuation cylinder (40) is coupled to the other outermost slide (6), and wherein the slides (6) are mutually coupled by way of entrainment installations (49) .

9. Gripper installation according to Claim 8, **characterized in that** the entrainment installations (49) comprise entrainment pins (50) which connect the slides (6) and engage in receptacles (53) that are configured on the respective slide.

10. Gripper installation according to one of Claims 6 to 9, **characterized in that** two guides (7) in the form of guide bars which penetrate the slides (6) in recesses and on which the slides (6) slide are provided.

11. Gripper installation according to one of the preceding claims, **characterized in that** at least one holding-down installation (9) which for holding down the items (15) during the raising of the gripper installation is capable of being placed from above on the items (15) is provided.

12. Gripper installation according to Claim 11, **characterized in that** the holding-down installation (9) is movable between a raised position, in which said holding-down installation (9) is situated while the items (15) are gripped, and a lowered position, in which said holding-down installation (9) is situated in the case of opened fingers (15) after the gripping.

13. Gripper installation according to Claim 11 or 12, **characterized in that** one strip-shaped holding-down installation (9) is in each case provided on both sides of the gripper portions (2).

14. Gripper installation according to Claim 12 or 13, **characterized in that** the, or each, holding-down installation (9) by means of an actuation means (11) is movable between the raised and the lowered position.

15. Gripper installation according to one of the preceding claims, **characterized in that** a distributor module (12) to which lines for feeding a pneumatic or hydraulic operating means are connectable and from which connection ducts or connection lines lead to the or the plurality of actuation means (5, 8, 11) is provided.

16. Handling device for handling elongate flexible items, in particular sausages, comprising at least one transport section (16) for transporting the items (15) that are disposed beside one another in a row and are mutually spaced apart in the row, at least one gripper installation (1) according to one of the preceding claims, as well as at least one receptacle installation (62) in or on which the items (15) gripped by means of the gripper installation (1) are capable of being deposited in a row.

17. Handling device according to Claim 16, **characterized in that** the transport section (16) is a compartmented belt (17) having compartments (18) that are disposed behind one another in the transporting direction.

18. Handling device according to Claim 16 or 17, **characterized in that** the receptacle installation (62) is a transport installation having receptacle elements, wherein the receptacle elements are preferably retrievable trays or fixed compartments.

19. Handling device according to one of Claims 16 to 18, **characterized in that** a robot-type motion installation comprising a holding installation on which the at least one gripper installation (1) is disposed is provided.

20. Handling device according to Claim 19, **characterized in that** two or more separately operating gripper installations (1) which in terms of the conveying direction of the transport section (16) are disposed behind or beside one another are provided on the holding installation.

21. Handling device according to Claim 20, **characterized in that** in the case of the disposal of two or more gripper installations (1) beside one another, a plurality of transport sections (16) and optionally receptacle installations (62) which correspond to the number of gripper installations are also provided.

22. Method for operating a handling device according to one of Claims 16 to 21, **characterized in that** the items which are onwardly conveyed in a row and mutually spaced apart on the transport installation (16) are gripped, raised, and relocated by way of the gripper installation (1), whereupon the items (15) are deposited in or on the receptacle installation (62).

## Revendications

1. Dispositif de préhension permettant la préhension simultanée de plusieurs objets flexibles allongés, en particulier de saucisses (15), comportant plusieurs parties de dispositif de préhension (2) disposées parallèlement les unes aux autres, **caractérisé en ce que** chaque partie de dispositif de préhension (2) comprend deux paires de doigts (3) espacées l'une de l'autre, les doigts (4) de chaque paire de doigts (3) saisissant l'un des objets (15) sur des côtés opposés et pouvant être déplacés simultanément l'un vers l'autre pour saisir l'objet (15), les doigts (4) étant pivotants autour d'un axe de pivotement vertical et pouvant être déplacés par le haut entre les objets et pouvant être déplacés à partir du côté vers les côtés des objets par pivotement autour des axes de pivotement, et les parties de dispositif de préhension (2) pouvant être actionnées simultanément.

2. Dispositif de préhension selon la revendication 1, **caractérisé en ce que** chaque doigt (4) est monté pivotant autour d'un axe de pivotement, les doigts (4) étant accouplés à un moyen d'entraînement commun.

3. Dispositif de préhension selon la revendication 2, **caractérisé en ce que** le moyen d'entraînement comporte un arbre d'entraînement (27) pouvant tourner autour de son axe longitudinal dans les deux sens par le biais d'un moyen de réglage (5), arbre d'entraînement auquel les doigts (4) sont accouplés.

4. Dispositif de préhension selon la revendication 3, **caractérisé en ce que** pour le couplage en mouvement des doigts avec l'arbre d'entraînement (27), les doigts (4) de chaque partie de dispositif de préhension (2) sont accouplés à un disque à cames (30) pouvant tourner par le biais de l'arbre d'entraînement (27), disque à cames contre lequel les doigts (4) s'appuient de manière précontrainte.

5. Dispositif de préhension selon la revendication 3 ou 4, **caractérisé en ce que** le moyen de réglage (5) est un mécanisme à crémaillère et roue dentée (22, 23), l'arbre d'entraînement (27) étant accouplé à la roue dentée (23) qui peut être entraînée en rotation par le biais de la crémaillère (23) pouvant être déplacée dans les deux sens.

6. Dispositif de préhension selon l'une des revendications précédentes, **caractérisé en ce que** les parties de dispositif de préhension (2) sont réalisées sous forme de chariots (6) montés de manière déplaçable linéairement sur au moins un guidage (7), chariots sur lesquels les paires de doigts (3) sont prévues.

7. Dispositif de préhension selon la revendication 6, **caractérisé en ce que** les chariots (6) sont déplaçables par le biais d'un moyen de réglage (8) entre une position de réception des objets (15), dans laquelle les chariots (6) sont disposés de manière espacée les uns des autres le long du guidage (7), et une position de restitution des objets (15), dans laquelle les chariots (6) sont rapprochés.

8. Dispositif de préhension selon la revendication 7, **caractérisé en ce que** le moyen de réglage (8) comporte deux cylindres de réglage (39, 40), la tige de piston (43) de l'un des cylindres de réglage (39) étant accouplée à l'un des chariots (6) les plus à l'extérieur et la tige de piston (44) de l'autre cylindre de réglage (40) étant accouplée à l'autre chariot (6) le plus à l'extérieur, et les chariots (6) étant accouplés les uns aux autres par le biais de dispositifs d'entraînement (49) .

9. Dispositif de préhension selon la revendication 8, **caractérisé en ce que** le dispositif d'entraînement (49) comporte des goupilles d'entraînement (50) qui relient les chariots (6) et viennent en prise dans des logements (53) réalisés sur le chariot respectif.

10. Dispositif de préhension selon l'une des revendications 6 à 9, **caractérisé en ce que** deux guidages (7) sont prévus sous la forme de tiges de guidage qui traversent les chariots (6) dans des évidements et sur lesquelles les chariots (6) glissent.

11. Dispositif de préhension selon l'une des revendications précédentes, **caractérisé en ce qu'**au moins un dispositif de maintien vers le bas (9) pouvant être placé par le haut sur les objets (15) et servant au maintien vers le bas des objets (15) pendant le soulèvement du dispositif de préhension est prévu.

12. Dispositif de préhension selon la revendication 11, **caractérisé en ce que** le dispositif de maintien vers le bas (9) est déplaçable entre une position soulevée, dans laquelle il se trouve lorsque les objets (15) sont saisis, et une position abaissée, dans laquelle il se trouve lorsque les doigts (15) sont ouverts après la préhension.

13. Dispositif de préhension selon la revendication 11 ou 12, **caractérisé en ce qu'**un dispositif de maintien vers le bas (9) en forme de bande est prévu respectivement des deux côtés des parties de dispositif de préhension (2) .

14. Dispositif de préhension selon la revendication 12 ou 13, **caractérisé en ce que** le ou chaque dispositif de maintien vers le bas (9) est déplaçable par le biais d'un moyen de réglage (11) entre la position soulevée et la position abaissée.

15. Dispositif de préhension selon l'une des revendications précédentes, **caractérisé en ce qu'**un module de distribution (12) est prévu, auquel des conduites servant à l'acheminement d'un fluide de fonctionnement pneumatique ou hydraulique peuvent être raccordées, et à partir duquel des canaux ou conduites de liaison mènent jusqu'au moyen de réglage ou aux moyens de réglage (5, 8, 11).

16. Dispositif de manipulation servant à la manipulation d'objets flexibles allongés, en particulier de saucisses, comportant au moins une voie de transport (16) servant au transport des objets (15) disposés les uns à côté des autres dans une rangée et espacés les uns des autres dans la rangée, au moins un dispositif de préhension (1) selon l'une des revendications précédentes ainsi qu'au moins un dispositif de préhension (62), dans ou sur lequel les objets (15) saisis au moyen du dispositif de préhension (1) peuvent être déposés dans une rangée.

17. Dispositif de manipulation selon la revendication 16, **caractérisé en ce que** la voie de transport (16) est une bande à tasseaux (17) dotée de tasseaux (18) disposés les uns derrière les autres dans le sens de transport.

18. Dispositif de manipulation selon la revendication 16 ou 17, **caractérisé en ce que** le dispositif de réception (62) est un dispositif de transport doté d'éléments de réception, les éléments de réception étant de préférence des coques amovibles ou des tasseaux fixes.

19. Dispositif de manipulation selon l'une des revendications 16 à 18, **caractérisé en ce qu'**un dispositif de déplacement de type robot est prévu, comportant un dispositif de maintien sur lequel l'au moins un dispositif de préhension (1) est disposé.

20. Dispositif de manipulation selon la revendication 19, **caractérisé en ce que** deux ou plus de deux dispositifs de préhension (1) travaillant séparément sont prévus, lesquels sont disposés les uns derrière les autres ou les uns à côté des autres par rapport au sens de convoyage de la voie de transport (16).

21. Dispositif de manipulation selon la revendication 20, **caractérisé en ce qu'**en cas de disposition de deux ou plus de deux dispositifs de préhension (1) les uns à côté des autres, également plusieurs voies de transport (16) et éventuellement dispositifs de réception (62) correspondant au nombre de dispositifs de préhension sont prévus.

22. Procédé de fonctionnement d'un dispositif de manipulation selon l'une des revendications 16 à 21, **caractérisé en ce que** les objets convoyés dans une rangée sur le dispositif de transport (16) et espacés les uns des autres sont saisis, soulevés et décalés à l'aide du dispositif de préhension (1), après quoi les objets (15) sont déposés dans ou sur le dispositif de réception (62).
